(19) Europäisches Patentamt

European Patent Office

Office européen des brevets

(11) **EP 4 089 593 A1**

(12) **EUROPEAN PATENT APPLICATION**
published in accordance with Art. 153(4) EPC

(43) Date of publication:
**16.11.2022 Bulletin 2022/46**

(21) Application number: **21839311.4**

(22) Date of filing: **09.09.2021**

(51) International Patent Classification (IPC):
**G06N 10/80** $^{(2022.01)}$     **G06N 10/70** $^{(2022.01)}$

(52) Cooperative Patent Classification (CPC):
**G06N 10/80;** G06N 10/70

(86) International application number:
**PCT/CN2021/117519**

(87) International publication number:
**WO 2022/205781 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.04.2021 CN 202110357168**

(71) Applicant: **Tencent Technology (Shenzhen) Company Limited**
**Shenzhen, Guangdong 518057 (CN)**

(72) Inventors:
• **XIE, Lei**
  **Guangdong 518057 (CN)**
• **ZHENG, Yicong**
  **Guangdong 518057 (CN)**
• **ZHANG, Shengyu**
  **Guangdong 518057 (CN)**
• **ZHAI, Jidong**
  **Guangdong 518057 (CN)**

(74) Representative: **Eisenführ Speiser**
**Patentanwälte Rechtsanwälte PartGmbB**
**Postfach 10 60 78**
**28060 Bremen (DE)**

(54) **METHOD AND APPARATUS FOR EXECUTING QUANTUM OPERATION, AND CHIP, DEVICE AND STORAGE MEDIUM**

(57)     This application discloses a quantum operation execution method and apparatus, a chip, a device, and a storage medium, and relates to the field of quantum technologies. The quantum operation execution method includes: obtaining n unscheduled quantum operations corresponding to a quantum circuit, performing an operation schedule based on a topological structure of a quantum computing device and the n unscheduled quantum operations, to obtain a target operation group; and executing in parallel the scheduled quantum operations included in the target operation group on the quantum computing device, a control waveform of the scheduled quantum operation being generated based on a designated target, the designated target being configured to minimize an inter-area crosstalk in a case that the quantum operation is controlled to be undistorted. The foregoing solutions are applicable to quantum operations of any type and any implementation principle, thereby greatly improving the applicability of crosstalk suppression.

FIG. 2

**Description**

RELATED APPLICATION

This application claims priority to Chinese Patent Application No. 202110357168.8, entitled "QUANTUM OPERATION EXECUTION METHOD AND APPARATUS, AND QUANTUM OPERATION CHIP" filed on April 1, 2021, which is incorporated herein by reference in its entirety.

FIELD OF THE TECHNOLOGY

Embodiments of this application relate to the field of quantum technologies, and in particular, to a quantum operation execution method and apparatus, a chip, a device, and a storage medium.

BACKGROUND OF THE DISCLOSURE

In a quantum computing device, coupling between qubits causes a crosstalk between the qubits, and therefore how to suppress the crosstalk between the qubits is an urgent problem to be resolved in quantum computation.

In the related technology, crosstalk suppression in the quantum computation generally has a hardware manner and a software manner. The software manner is mainly to introduce an additional waveform to correct distortion of a two-bit operation in a scenario in which the two-bit operation is implemented by using a cross-resonance effect, thereby reducing the crosstalk effect under the two-bit operation.

Then, the foregoing software-based crosstalk suppression manner is only applicable to the scenario in which the two-bit operation is implemented by using the cross-resonance effect, resulting in relatively poor applicability for the crosstalk suppression.

SUMMARY

Embodiments of this application provide a quantum operation execution method and apparatus, a chip, a device, and a storage medium, to implement crosstalk suppression on any type of quantum operation in a software manner, thereby improving the applicability of the crosstalk suppression. The technical solutions are as follows:

According to an aspect of the embodiments of this application, a quantum operation execution method is provided, performed by a computer device, the method including:

obtaining n unscheduled quantum operations corresponding to a quantum circuit, n being greater than or equal to 1, and n being an integer;

performing an operation schedule based on a topological structure of a quantum computing device and the n unscheduled quantum operations, to obtain a target operation group, the target operation group including a plurality of scheduled quantum operations; and

executing in parallel the scheduled quantum operations included in the target operation group on the quantum computing device,

a control waveform of the scheduled quantum operation being generated based on a designated target, the designated target being configured to minimize an inter-area crosstalk in a case that the quantum operation is controlled to be undistorted, the inter-area crosstalk being a crosstalk between qubits falling within different connected areas, the connected areas being obtained through division on qubits in the quantum computing device according to whether a quantum operation being executed on the qubits.

According to an aspect of the embodiments of this application, a method for generating a control waveform of a quantum operation is provided, performed by a computer device, the method including:

obtaining a scheduled quantum operation;

obtaining a function parameter of a control waveform function of the scheduled quantum operation based on a designated target; the designated target being configured to minimize an inter-area crosstalk in a case that the quantum operation is controlled to be undistorted, the inter-area crosstalk being a crosstalk between qubits falling within different connected areas, the connected area being obtained through division according to whether a quantum operation being executed on qubits included in a quantum computing device; and

generating a control waveform of the scheduled quantum operation based on the function parameter.

According to an aspect of the embodiments of this application, a quantum operation execution apparatus is provided, the apparatus including:

a quantum operation obtaining module, configured to obtain n unscheduled quantum operations corresponding to a quantum circuit, n being greater than or equal to 1, and n being an integer;

a quantum operation schedule module, configured to perform an operation schedule based on a topological structure of a quantum computing device and the n unscheduled quantum operations, to obtain a target operation group, the target operation group including a plurality of scheduled quantum operations; and

a quantum operation execution module, configured to execute in parallel the scheduled quantum operations included in the target operation group on the quantum computing device,

a control waveform of the scheduled quantum operation being generated based on a designated target, the designated target being configured to minimize an inter-area crosstalk in a case that the quantum operation is controlled to be undistorted, the inter-area crosstalk being a crosstalk between qubits falling within different connected areas, the connected areas being obtained through division according to whether a quantum operation being executed on qubits in the quantum computing device.

According to an aspect of the embodiments of this application, an apparatus for generating a control waveform of a quantum operation is provided, the apparatus including:

a quantum operation obtaining module, configured to obtain a scheduled quantum operation;

a parameter obtaining module, configured to obtain a function parameter of a control waveform function of the scheduled quantum operation based on the designated target; the designated target being configured to minimize an inter-area crosstalk in a case that the quantum operation is controlled to be undistorted, the inter-area crosstalk being a crosstalk between qubits falling within different connected areas, the connected areas being obtained through division on qubits in the quantum computing device according to whether a quantum operation being executed on the qubits; and

a waveform generation module, configured to generate a control waveform of the scheduled quantum operation based on the function parameter.

According to an aspect of the embodiments of this application, a quantum operation chip is provided. The quantum operation chip is configured to implement the quantum operation execution method described above, or the quantum operation chip is configured to implement the method for generating a control waveform of a quantum operation described above.
According to an aspect of the embodiments of this application, a computer device is provided. The computer device includes at least one quantum operation chip described above.
According to an aspect of the embodiments of this application, a computer-readable storage medium is provided. The storage medium stores at least one computer instruction, the at least one computer instruction, when executed by a processor in a computer device, causing the computer device to implement the quantum operation execution method described above, or the method for generating a control waveform of a quantum operation described above.
According to an aspect of the embodiments of this application, a computer program product is provided. The computer program product includes computer instructions, the computer instructions, when executed by a processor in a computer device, causing the computer device to implement the quantum operation execution method described above, or the method for generating a control waveform of a quantum operation described above.
The technical solutions provided in the embodiments of this application include at least the following beneficial effects:
Quantum operations are scheduled based on a quantum circuit and a topological structure of a quantum computing device, to obtain scheduled quantum operations, and the scheduled quantum operations are executed on the quantum computing device, a waveform of the executed quantum operation being a control waveform for minimizing an inter-area crosstalk while ensuring that the quantum operation is undistorted on the quantum computing device. The foregoing solutions can achieve crosstalk suppression by optimizing an execution sequence of the quantum operations and the control waveform based on the topological structure of the quantum circuit, without being limited by operation types and implementation principles of the quantum operations, and are applicable to quantum operations of any type and any implementation principle, thereby greatly improving the applicability of the crosstalk suppression.

BRIEF DESCRIPTION OF THE DRAWINGS

To describe the technical solutions in the embodiments of this application more clearly, the following briefly introduces the accompanying drawings required for describing the embodiments. Apparently, the accompanying drawings in the following description show only some embodiments of this application, and a person of ordinary skill in the art may still derive other accompanying drawings from these accompanying drawings without creative efforts.

FIG. 1 is a schematic diagram of an application scenario of a solution according to an embodiment of this application.

FIG. 2 is a flowchart of a quantum operation execution method according to an embodiment of this application.

FIG. 3 is a flowchart of a quantum operation execution method according to an embodiment of this application.

FIG. 4 is a schematic diagram of ZZ crosstalk suppression involved in the embodiment shown in FIG. 3.

FIG. 5 is a schematic diagram of mutual restriction between a quantity of qubits in a largest area and a total quantity of insuppressible ZZ crosstalks involved in the embodiment shown in FIG. 3.

FIG. 6 is a topological graph and a dual graph of the topological graph involved in the embodiment shown in FIG. 3.

FIG. 7 is a schematic diagram of solving optimal suppression involved in the embodiment shown in FIG. 3.

FIG. 8 is an exemplary diagram of solving an optimal suppression problem involved in the embodiment shown in FIG. 3.

FIG. 9 is a schematic diagram of a quantum circuit involved in the embodiment shown in FIG. 3.

FIG. 10 is a schematic diagram of a suppression solution involved in the embodiment shown in FIG. 3.

FIG. 11 is a schematic diagram of a difference between suppression effects involved in the embodiment shown in FIG. 3.

FIG. 12 is a schematic diagram of a single-bit operation involved in the embodiment shown in FIG. 3.

FIG. 13 is a schematic diagram of a single-bit waveform involved in the embodiment shown in FIG. 3.

FIG. 14 is a schematic diagram of a single-bit waveform involved in the embodiment shown in FIG. 3.

FIG. 15 is a schematic diagram of a single-bit operation and a two-bit operation involved in the embodiment shown in FIG. 3.

FIG. 16 is a diagram of a topology of a single-bit waveform involved in the embodiment shown in FIG. 3.

FIG. 17 is a schematic diagram of a case of crosstalk suppression involved in the embodiment shown in FIG. 3.

FIG. 18 is a schematic diagram of another case of crosstalk suppression involved in the embodiment shown in FIG. 3.

FIG. 19 is a diagram of a topology of a two-bit waveform involved in the embodiment shown in FIG. 3.

FIG. 20 is a schematic diagram of a comparison between suppression effects on a ZZ crosstalk during implementation of a $R_{xx}(\pi/2)$ operation involved in the embodiment shown in FIG. 3.

FIG. 21 shows a grid topology involved in the embodiment shown in FIG. 3.

FIG. 22 is a schematic diagram of a comparison between two schedule manners involved in the embodiment shown in FIG. 3.

FIG. 23 is a schematic diagram of executing a quantum circuit involved in the embodiment shown in FIG. 3.

FIG. 24 is a schematic diagram of a quantum memory involved in the embodiment shown in FIG. 3.

FIG. 25 is a schematic diagram of an identity quantum circuit involved in the embodiment shown in FIG. 3.

FIG. 26 is a block diagram of a quantum operation execution apparatus according to an embodiment of this application.

FIG. 27 is a block diagram of an apparatus for generating a control waveform of a quantum operation according to an embodiment of this application.

FIG. 28 is a structural block diagram of a computer device according to an embodiment of this application.

DESCRIPTION OF EMBODIMENTS

To make objectives, technical solutions, and advantages of this application clearer, the following further describes implementations of this application in detail with reference to the accompanying drawings.
Some terms involved in this application are explained before describing embodiments of this application.

1. Quantum computation: a computation manner of using properties such as superposition and entanglement of quantum states to rapidly complete a computation task.

2. Qubit: a carrying form of quantum information, and is briefly referred to as bit in some parts in the following.

3. Quantum operation: operation on qubits, to process quantum information carried by the qubits. Common quantum operations include Pauli $X$, $Y$, and Z transform (or written as $\sigma_x$, $\sigma_y$, $\sigma_z$), Hadamard transform ($H$), controlled Pauli X transform ($CNOT$), and the like. Any quantum computation can be implemented by using only single-bit operation and two-bit operation, which are briefly referred to as operations in some parts in the following.

4. Quantum circuit: a description model of quantum computation, and includes qubits and quantum operations on the qubits.

5. Quantum computing device: a physical apparatus that performs quantum computation.

6. Execution parallelism of quantum circuit: a quantity of quantum operations that are executed simultaneously when a quantum circuit is executed on a quantum computing device.

7. Hamiltonian: a mathematical tool for describing evolution of a quantum system (for example, a qubit). Effective Hamiltonian is simplified Hamiltonian obtained after a coordinate transformation is performed on original Hamiltonian and irrelevant factors are ignored.

8. Superconducting quantum computing device: a quantum computing device with qubits being implemented using a superconducting technology. In the superconducting quantum computing device, a control waveform (control pulse) is applied to affect a specific item in Hamiltonian, which may affect evolution of a qubit, thereby implementing a quantum operation.

9. ZZ crosstalk: an $\sigma_z \otimes \sigma_z$ interaction generated due to a coupling between high energy levels of qubits. In a superconducting quantum computing device, there is a ZZ crosstalk between two bits that have a physical coupling, which is an always-on interaction.

10. Quantum memory: an apparatus for storing quantum information. A difference from a quantum computing device is that an objective of designing a quantum memory is to store information for a long time instead of performing computation, but some quantum operations (or referred to as refreshes) may also be executed on the quantum memory to prolong an information storage time.

11. Quantum error correction code: There are various errors in a real quantum computing device, and quantum error correction code is used for encoding qubits, to improve an error tolerance rate of quantum computation.

12. Fidelity: an index for measuring a similarity between an actual value and a true value. There are different definitions in specific scenarios. A higher fidelity indicates that the actual value is more similar to the true value.

13. Graph: Mathematically, a graph is formed by vertices and edges connecting the vertices, and is denoted by $G = (V, E)$, $V$ being a vertex set and $E$ being an edge set. A topological structure of a quantum computing device may be represented by a graph, vertices representing qubits, and edges representing couplings between the qubits.

14. Planar graph and dual graph: A graph that can be drawn on a plane in some manner with ensuring different edges not being intersected is referred to as a planar graph. There is a dual graph for a planar graph. Vertices of the dual graph correspond to a plane of the planar graph. When two planes in the planar graph are adjacent, corresponding vertices in the dual graph are connected to form an edge. In this way, edges of the dual graph are in a one-to-one correspondence with edges of the planar graph. A dual graph of a planar graph G is denoted by $G^*$, and an edge $(u, v)$ of the planar graph corresponds to an edge $(u, v)^*$ of the dual graph.

15. Shortest path: a shortest path among all paths for connecting two vertices.

16. Connected component: connected component is a subgraph of a graph, and meets a condition (a connectivity condition) that all vertices are connected by paths. If the connectivity condition will be violated when adding any other vertex in the graph, the connected component is referred to as a maximum connected component.

17. Cut and cut-set: A cut C = (S, T) of a graph $G = (V, E)$ is a division of dividing a vertex set $V$ of the graph into two non-intersected sets S and T, and a corresponding cut set $E_C$ is a set formed by edges between two end points that separately belong to S and T in an edge set $E$ of the graph, that is, $E_C = \{(u, v) | u \in S, V \in T\}$.

18. Odd-vertex pairing: When there are no vertices with odd degrees in a graph after an edge set $D$ is removed, the edge set is referred to as odd-vertex pairing. A degree of a vertex is a quantity of edges connecting to the vertex. Any odd-vertex pairing includes all odd-vertices in a graph.

19. Maximum matching: One matching of a graph is a subgraph of the graph, every two edges having no common vertex. Maximum matching of a graph is matching with a maximum quantity of edges.

20. Vertex 2-coloring: One of two colors is assigned to a vertex, so that vertices connected by edges have different colors. If a graph can be vertex 2-colored, the graph is a bipartite graph.

21. Search: a method for efficiently finding an optimal solution in many possible solutions to a problem. Common search methods include: exhaustive search in which all possibilities are exhausted to select an optimal solution, and beam search in which a solution to a problem includes solutions to several sub-problems, and only a limited quantity of search methods of a solution are reserved for each sub-problem during solving.

In the related technology, technical solutions for suppressing a ZZ crosstalk may be classified into four types:

1) Use an adjustable coupling. A ZZ crosstalk needs to be mediated through a coupling between qubits. When the coupling is not required, the coupling may be equivalently "turned off' by reducing the coupling strength, thereby suppressing the crosstalk.

2) Use heterogeneous qubits. The intensity of a ZZ crosstalk is related to the anharmonicity of two qubits that are coupled. When the anharmonicity is equal in values and opposite in symbols (absolute values are the same, and symbols are opposite), the intensity of the ZZ crosstalk is 0. By using the heterogeneous qubits, equal values and opposite symbols of the anharmonicity can be implemented, thereby suppressing the ZZ crosstalk.

3) Introduce a plurality of coupling manners. ZZ crosstalks mediated in different coupling manners have different intensities, especially may have opposite symbols. By introducing a plurality of coupling manners, intensities of crosstalks mediated in different manners are canceled each other out, and the ZZ crosstalk can be suppressed.

4) Apply an additional waveform. When a two-bit operation is executed, a ZZ crosstalk causes distortion of the two-bit operation. By applying an additional waveform, this distortion can be corrected to a certain extent, thereby reducing the impact of the ZZ crosstalk.

The first three types in the foregoing technical solutions are hardware implementation solutions, and have a defect of requiring complex hardware structures and control logic. For example, in an adjustable coupling solution, an additional coupler and a control line for controlling the coupler need to be introduced. The heterogeneous qubits have higher requirements on a manufacturing process of a chip, parameters of different couplings need to be accurately controlled in a plurality of coupling manners, and the complex hardware structures increase the control complexity and introduce additional decoherence factors. Compared with the solutions, solutions provided in the subsequent embodiments of this application may be applied to a homogeneous qubit chip with a single fixed coupling. In addition, the solutions shown in this application may also be applied to hardware in the three types of hardware implementation solutions, and have good commonality.

A defect of the solution of applying an additional waveform lies in poor applicability. This solution is designed for a two-bit operation implemented by using a cross-resonance effect, and currently, there is no work indicating that the solution can be applied to a single-bit operation or an operation implemented in another manner. In contrast, the solutions provided in the subsequent embodiments of this application are applicable to both a single-bit operation and a two-bit operation, and have no special requirements for a technology for implementing the operations.

In summary, this application provides a simpler and more universal crosstalk suppression method, which does not require complex hardware structures to support and has high applicability.

In a framework of a full-stack programmable quantum computer, a quantum algorithm, a quantum high-level language, and a quantum compiler are included at a top layer, and a quantum chip (or referred to as a quantum circuit) is at a bottom layer. To connect the top layer and the bottom layer together, similar to a classical computer, there is a quantum architecture in a middle layer. In such a full-stack programmable quantum computer, a quantum architecture (including a quantum instruction set and a quantum control microarchitecture) plays an important role in communication between quantum software and quantum hardware, and needs to provide functions such as program flow control, feedback control, and a precise timing gate operation sequence.

During specific implementation, the quantum instruction set is generated by a compiler, and the quantum control microarchitecture is implemented as a quantum control processor (QCP) in hardware, and controls the quantum chip by executing the quantum instruction set. An output of the QCP finally controls a series of analog instruments (that is, control & read electronic instruments). For example, in a superconducting quantum computing system, an analog instrument herein converts a digital signal into an analog microwave waveform to control the quantum chip.

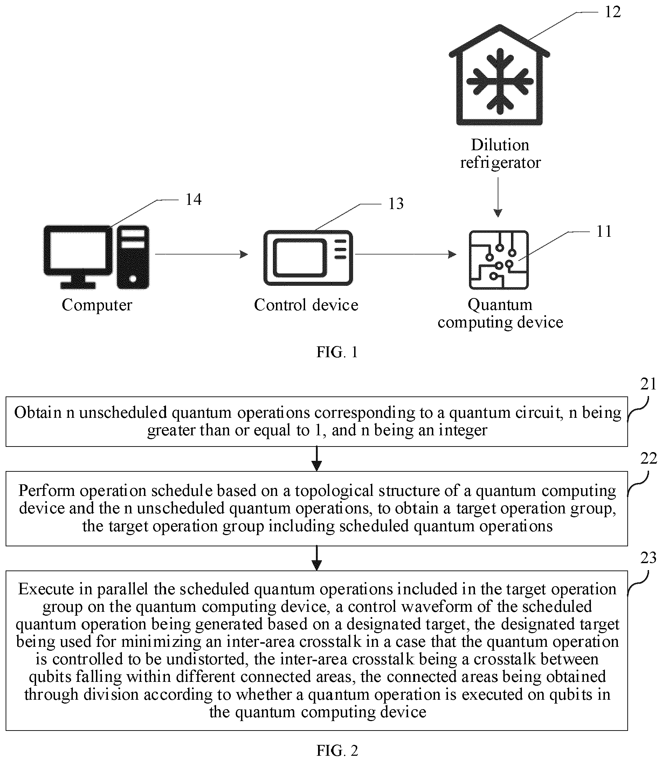

FIG. 1 is a schematic diagram of an application scenario of a solution according to an embodiment of this application. As shown in FIG. 1, the application scenario may be a superconducting quantum computing platform. The application scenario includes: a quantum computing device 11, a dilution refrigerator 12, a control device 13, and a computer 14.

The quantum computing device 11 is a circuit acting on physical qubits, and the quantum computing device 11 may be implemented as a quantum chip, for example, a superconducting quantum chip at near absolute zero. The dilution refrigerator 12 is configured to provide an environment of absolute zero for the superconducting quantum chip.

The control device 13 is configured to control the quantum computing device 11, and the computer 14 is configured to control the control device 13. For example, a programmed quantum program is compiled into an instruction by using software in the computer 14 to be sent to the control device 13 (for example, an electronic/microwave control system), and the control device 13 converts the instruction into an electronic/microwave control signal and inputs the electronic/microwave control signal into the dilution refrigerator 12, to control superconducting qubits at a temperature less than 10 mK. A reading process is opposite to the above, and a read waveform is transmitted to the quantum computing device 11.

The dilution refrigerator 12 is configured to provide a working environment for the quantum computing device 11 (for example, a superconducting quantum chip). The quantum computing device 11 is controlled by an analog waveform. Therefore, a measurement and control system including a field programmable gate array (FPGA) and an analog-to-digital converter (ADC)/digital-to-analog converter (DAC) is required to provide control and measurement. The measurement and control system is also controlled by measurement and control software of an upper computer (for example, the computer 14). The measurement and control software determines an operation that needs to be executed currently, and configuration for operating the measurement and control system. The upper computer may be a classical computer such as a personal computer (PC).

Before the method embodiments of this application are described, a running environment of the method is described first. A quantum operation execution method provided in the embodiments of this application may be implemented by a classical computer (for example, a PC). For example, the method is implemented by executing a corresponding computer program by the classical computer, or may be performed in a hybrid device environment of the classical computer and a quantum computer. For example, the classical computer performs steps such as generating a control waveform, and the quantum computer implements steps such as executing quantum operations based on the control waveform.

In the following method embodiments, for ease of description, description is provided by merely using a computer device as an execution body of the steps. The computer device may be a classical computer, or may be a hybrid execution environment including a classical computer and a quantum computer. This is not limited in the embodiments of this application.

FIG. 2 is a flowchart of a quantum operation execution method according to an embodiment of this application. An execution entity of steps of the method may be a computer device. The method may include the following steps:

Step 21: Obtain n unscheduled quantum operations corresponding to a quantum circuit, n being greater than or equal to 1, and n being an integer.

The n unscheduled quantum operations corresponding to the quantum circuit are some or all of quantum operations that are not executed in the quantum circuit.

Step 22: Perform an operation schedule based on a topological structure of a quantum computing device and the n unscheduled quantum operations, to obtain a target operation group, the target operation group including a plurality of scheduled quantum operations.

In this embodiment of this application, the operation schedule on the quantum operations refers to determining to execute one or more quantum operations in parallel in the quantum computing device at a specific time point.

Step 23: Execute in parallel the scheduled quantum operations included in the target operation group on the quantum computing device, a control waveform of the scheduled quantum operation being generated based on a designated target, the designated target being configured to minimize an inter-area crosstalk in a case that the quantum operation is controlled to be undistorted, the inter-area crosstalk being a crosstalk between qubits falling within different connected areas, the connected areas being obtained through division on qubits in the quantum computing device according to whether a quantum operation being executed on the qubits.

In this embodiment of this application, the qubits in the quantum computing device may be divided into two types at a moment A. One type is qubits on which quantum operations are executed at the moment A (a plurality of quantum operations may be executed in parallel), and the other type is qubits on which quantum operations are not executed at the moment A. The two types of qubits form at least two connected areas in the topological structure of the quantum circuit.

For one connected area, types of all qubits in the connected area are the same, and when the connected area includes two or more qubits, any qubit in the connected area is adjacent to at least one another qubit in the connected area (where two qubits adjacent to each other means that there is an edge or a coupling between the two qubits).

In addition, for the two qubits adjacent in the quantum computing device, if types of the two qubits are different at the moment A, the two qubits fall within different connected areas at the moment A.

The inter-area crosstalk may be a ZZ crosstalk between the connected areas, or may be another type of crosstalk between the connected areas.

In summary, in the solution shown in the embodiments of this application, quantum operations are scheduled based on a quantum circuit and a topological structure of a quantum computing device, to obtain scheduled quantum operations, and the scheduled quantum operations are executed on the quantum computing device, a waveform of the executed quantum operation being a control waveform for minimizing an inter-area crosstalk while ensuring that the quantum operation is undistorted on the quantum computing device. The foregoing solutions can implement crosstalk suppression by optimizing an execution sequence of the quantum operations and the control waveform based on the topological structure of the quantum circuit, without being limited by operation types and implementation principles of the quantum operations, and are applicable to quantum operations of any type and any implementation principle, thereby greatly improving the applicability of the crosstalk suppression.

In an embodiment of this application, a method for generating a control waveform of a quantum operation is further provided, the method including: obtaining a scheduled quantum operation; obtaining a function parameter of a control waveform function of the scheduled quantum operation based on a designated target; the designated target being configured to minimize an inter-area crosstalk in a case that the quantum operation is controlled to be undistorted, the inter-area crosstalk being a crosstalk between qubits falling within different connected areas, the connected area being obtained through division according to whether a quantum operation being executed on qubits included in a quantum computing device; and generating a control waveform of the scheduled quantum operation based on the function parameter.

The embodiment shown in FIG. 2 in this application provides a solution for optimizing a control waveform of a quantum operation at a waveform control level, and a control waveform obtained by using this solution can effectively suppress an inter-area crosstalk while implementing a quantum operation. Based on this, a quantum circuit-based operation schedule solution (also referred to as circuit schedule/quantum circuit schedule) is further provided at a quantum circuit level. The schedule solution can ensure the high execution parallelism of the quantum circuit while implementing optimal suppression, thereby maximizing the fidelity of executing the quantum circuit.

The solution shown in this application may work at a software level, and based on a universal qubit control model, can avoid complex hardware components and control logic in an existing solution, so that the solution is simpler and more universal. This solution may be applied to a superconducting quantum computing device to provide high-fidelity quantum computation for crosstalk suppression, or may be used to improve a quantum memory and prolong a storage time of quantum data.

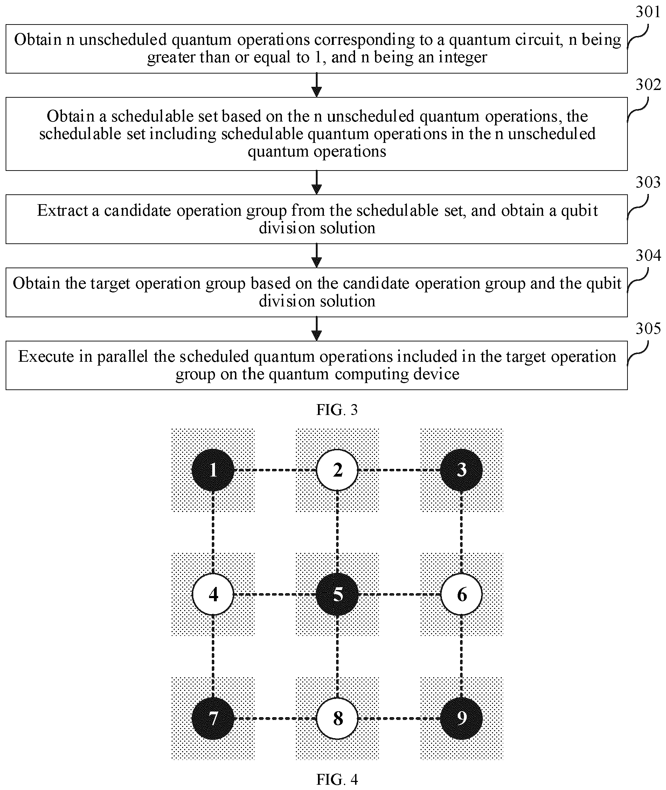

FIG. 3 is a flowchart of a quantum operation execution method according to an embodiment of this application. An execution entity of steps of the method may be a computer device. The method may include the following steps: Step 301: Obtain n unscheduled quantum operations corresponding to a quantum circuit, n being greater than or equal to 1, and n being an integer.

In this embodiment of this application, when there is a to-be-executed quantum computing task in a quantum computing system, the computer device may obtain a quantum circuit corresponding to the quantum computing task, and further obtain n unscheduled quantum operations corresponding to the quantum circuit.

The unscheduled quantum operations are quantum operations that are not scheduled yet by the computer device to be executed on the quantum computing device.

Step 302: Obtain a schedulable set based on the n unscheduled quantum operations, the schedulable set including schedulable quantum operations in the n unscheduled quantum operations.

In a quantum circuit, there may be a dependency relationship or an execution sequence relationship between two or more quantum operations. That is, a quantum operation A may be scheduled to be executed only after a previous quantum operation B has been executed, and the quantum operation B may be referred to as a pre-quantum operation of the quantum operation A.

In a possible implementation, the schedulable quantum operations in the n unscheduled quantum operations may be quantum operations that may be executed at a current moment in quantum operations that are not scheduled to be executed in a quantum circuit, where a quantum operation that may be executed may mean that there is no unexecuted pre-quantum operation corresponding to the quantum operation in a quantum circuit.

Step 303: Extract a candidate operation group from the schedulable set, and obtain a qubit division solution.

The qubit division solution is obtained based on the topological structure according to a designated division manner, and the qubit division solution indicates that the qubits in the quantum computing device are divided into two qubit sets, to form at least two connected areas on the quantum computing device.

In this embodiment of this application, the computer device may extract a candidate operation group by selecting, based on whether quantum operations in the schedulable set include two-bit quantum operations, to use different solutions, and obtain a qubit division solution by using different solutions. The following describes, from two aspects, the qubit division solution of whether the quantum operations in the schedulable set including the two-bit quantum operations.

1) The quantum operations in the schedulable set are single-bit quantum operations.

In a possible implementation, the computer device obtains the schedulable set, as the candidate operation group, in a case that quantum operations in the schedulable set are single-bit quantum operations.

When all the quantum operations in the schedulable set are single-bit quantum operations, the computer device only needs to obtain an operation group formed by all the quantum operations in the schedulable set as the candidate operation group without considering a case whether two bits corresponding to the same quantum operation are simultaneously divided into two sets.

If the candidate operation group is an operation group extracted when the quantum operations in the schedulable set are single-bit quantum operations, the computer device may obtain a target odd-vertex pairing solution according to a second designated division manner based on the topological structure; then remove edges corresponding to the target odd-vertex pairing solution from the topological graph, to obtain a topological graph after edge removal; and then perform vertex 2-coloring on the topological graph after the edge removal, to obtain the qubit division solution.

In a possible implementation, the obtaining a target odd-vertex pairing solution according to a second designated division manner based on the topological structure includes:

obtaining a complete graph, vertices in the complete graph being odd-vertices in a target dual graph, the target dual graph being a dual graph of a topological graph, the topological graph being a planar graph of the topological structure of the quantum computing device;

determining paired odd-vertex pairs in the complete graph;

obtaining at least one odd-vertex pairing solution for the odd-vertex pairs, the odd-vertex pairing solution comprising a path of each of the odd-vertex pairs in the target dual graph;

obtaining a quantity of qubits in a largest area in each of the at least one odd-vertex pairing solution and a total quantity of insuppressible crosstalks in each of the at least one odd-vertex pairing solution, the total quantity of insuppressible crosstalks being represented by a quantity of edges corresponding to paths in the odd-vertex pairing solution in the topological graph; the quantity of qubits in the largest area being represented by a quantity of vertices in a largest connected area in the topological graph after a cut set is removed, the cut set being a set of edges remained in the topological graph after the edges corresponding to the paths in the odd-vertex pairing solution in the topological graph are removed;

obtaining a crosstalk suppression index of each of the at least one odd-vertex pairing solution based on the quantity of qubits in the largest area in each of the at least one odd-vertex pairing solution and the total quantity of insuppressible crosstalks in each of the at least one odd-vertex pairing solution; and

obtaining an odd-vertex pairing solution corresponding to a minimal crosstalk suppression index, as the target odd-vertex pairing solution.

In a possible implementation, the obtaining at least one odd-vertex pairing solution for the odd-vertex pairs includes:

obtaining first k short paths of each odd-vertex pair in the complete graph, k≥1, and k being an integer; and

combining the first k short paths of each odd-vertex pair in the complete graph, to obtain at least one odd-vertex pairing solution.

In a possible implementation, the crosstalk suppression index is: $\alpha N_Q + N_C$,

$N_Q$ representing the quantity of qubits in the largest area, $N_C$ representing the total quantity of insuppressible crosstalks, and $\alpha$ representing importance of $N_Q$ and $N_C$.

With reference to the description of the foregoing content, when the quantum operations in the schedulable set are single-bit quantum operations, the computer device only needs to obtain an operation group formed by all the quantum operations in the schedulable set as the candidate operation group without considering a case whether two bits corresponding to the same quantum operation are simultaneously divided into two sets; and then the computer device obtains a final target odd-vertex pairing solution according to the second designated division manner, and then obtains the qubit division solution based on the target odd-vertex pairing solution.

In the second designated division manner, the ZZ crosstalk can be suppressed to the greatest extent by selectively applying identity operations on some qubits. FIG. 4 is a schematic diagram of ZZ crosstalk suppression involved in this embodiment of this application. FIG. 4 shows an example of suppressing a ZZ crosstalk between 9 qubits on a quantum computing device. In this example, by applying identity quantum operations on black vertices, all ZZ crosstalks on the quantum computing device are suppressed. In this application, this case may be referred to as complete suppression.

By applying a quantum operation on a qubit, each qubit is divided into an independent area, so that all ZZ crosstalks on the quantum computing device are suppressed. In this case, it is referred that the quantum computing device has a complete suppression solution.

If a topological graph of a quantum computing device is a bipartite graph, the quantum computing device has a complete suppression solution.

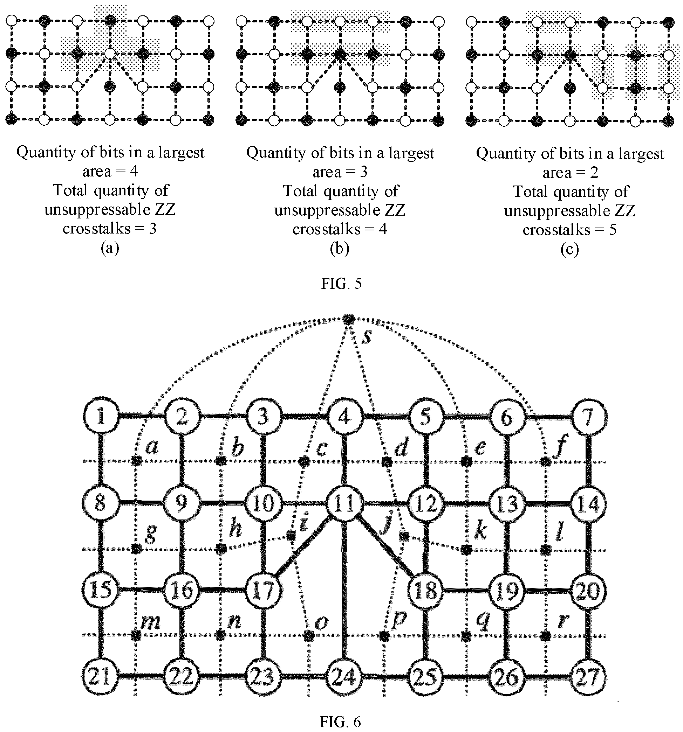

For a topological structure that does not have complete suppression, there is at least one area, which includes two or more qubits, and a crosstalk within connected areas formed by the two or more qubits is not suppressed. For this case, two indexes need to be paid attention to: a quantity of qubits in a largest area and a total quantity of insuppressible ZZ crosstalks; and the two indexes restrict each other. FIG. 5 is a schematic diagram of mutual restriction between a quantity of qubits in a largest area and a total quantity of insuppressible ZZ crosstalks involved in this embodiment of this application.

To represent this restriction, this application provides a concept of "optimal suppression":

By applying quantum operations on qubits, the qubits in the quantum computing device are divided into several connected areas, a quantity of qubits in a largest connected area is denoted by $N_Q$, a total quantity of insuppressible ZZ crosstalks is denoted by $N_C$, and a coefficient $\alpha$ for representing importance of the two is given. If $\alpha N_Q + N_C$ is minimized in a specific suppression solution, it is referred that the quantum computing device has an optimal suppression solution.

For example, in the topological structure shown in FIG. 5, when a solution shown in a part (a) in FIG. 5 is the optimal suppression solution, $\alpha = 0$; when a solution shown in a part (b) in FIG. 5 is the optimal suppression solution, $\alpha = 1.5$; when a solution shown in a part (c) in FIG. 5 is the optimal suppression solution, $\alpha = 2$.

To solve out the optimal suppression solution, the problem may be converted into a cut problem of a graph: A cut C = (S, T) of a graph G = (V, E) is a division manner of dividing a vertex set V of the graph into two non-intersected sets S and T, and a corresponding cut set $E_C$ is a set formed by edges between two end points that separately belong to S and T in an edge set E of the graph, that is, $E_C = \{(u, v)|u \in S, V \in T\}$.

An equivalent problem of finding the optimal suppression solution: The graph G = (V, E) and an importance coefficient $\alpha$ are given, and a cut C = (S, T) is to be found, so that $\alpha N_Q + N_C$ is minimized, $N_Q$ being a quantity of vertices with a largest connected component after the cut set $E_C$ is removed from G, and $N_C$ being a total quantity of edges remained in G after the cut set $E_C$ is removed from G.

Two vertex sets S and T obtained through cut deriving respectively correspond to "vertex set with applied waveforms" and "vertex set without applied waveforms", and a coupling corresponding to a cut set spans different areas. Therefore, a crosstalk mediated by the coupling corresponding to the cut set can be suppressed. On the contrary, for a coupling corresponding to a complement of the cut set, because two qubits connected to the couplings fall within the same connected area, a crosstalk mediated by the coupling corresponding to the complement of the cut set cannot be suppressed.

After the solution of the foregoing graph problem is given, optimal suppression can be implemented provided that quantum operations are applied to only qubits in the "vertex set with applied waveforms". For example, in FIG. 4, black and white vertices constitute vertex sets S and T, and dotted-line edges are included in cut sets. Therefore, a crosstalk mediated by the couplings can be suppressed. However, solid-line edges do not belong to the cut sets, and a mediated crosstalk cannot be suppressed.

It is difficult to resolve the cut problem of the foregoing graph: considering a case $\alpha$ = 0, a cut needs to be found, so that a quantity of edges remained after a cut set is removed is minimized, that is, the cut set includes a maximum quantity of edges. This is the biggest cut problem which is a nondeterministic polynomial-time complete (NP-Complete) problem, and there is no universal polynomial algorithm. Therefore, a heuristic method is considered to be used for solving in this application. In addition, considering that topological structures of most topological quantum error correction codes are planar graph structures, a solution of this application is designed for the planar graph in this application. The solution shown in this application is based on the following concepts:

Odd-vertex pairing: When there are no vertices with odd degrees in a graph after an edge set D is removed, the edge set is referred to as odd-vertex pairing. Any odd-vertex pairing includes all odd-vertices in a graph. Because a quantity of odd-vertices in any graph is an even number, the edge set D is referred to as a pairing.

Dual graph: There is a dual graph of a planar graph, and vertices of the dual graph correspond to planes of the planar graph. When two planes in the planar graph are adjacent, edges between the corresponding vertices in the dual graph are connected. In this way, edges of the dual graph are in a one-to-one correspondence with edges of the planar graph. A dual graph of a planar graph G is denoted by $G^*$, and an edge (u, v) of the planar graph corresponds to an edge $(u, v)^*$ of the dual graph.

Theorem: Only when an edge set $\overline{D^*}$, which corresponds to a complement $\overline{D}$ of one edge set D of the graph G, in the dual graph $G^*$, is an odd-vertex pairing of the dual graph $G^*$, the edge set D of the graph G is included in a cut set $E_C$.

For example, FIG. 6 shows a topological graph and a dual graph of the topological graph. FIG. 6 shows the topological graph and the dual graph of the topological graph in the example shown in FIG. 5. Edges with only one vertex on a boundary of the graph are all connected to s, and odd-vertices in the dual graph are i and j. The complements of the cut set in the part (a) in FIG. 5 are {(10,11), (4,11), (11,12)}, {(c,i), (c,d) (d, j)} in the corresponding dual graph is one odd-vertex pairing of the dual graph. Similarly, the complements of the cut set in the part (b) in FIG. 5 and an odd-vertex pairing of the corresponding dual graph are: {(10, 11), (11, 12), (3, 4), (4, 5) → (c, i), (d, j), (c, s), (d, s)}.

Lemma: If one edge set D in the graph G is included in one cut set $E_C$, remained edges $E_C \subseteq \overline{D}$ in the cut set $E_C$ are removed.

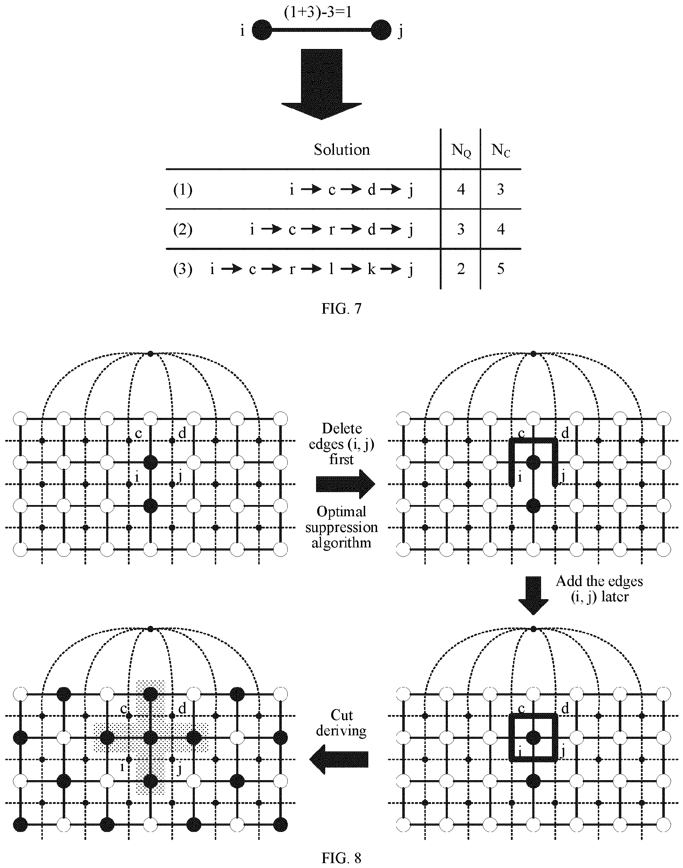

According to the foregoing theorem and lemma, the problem of finding a cut in the topological graph may be converted into a problem of finding an odd-vertex pairing $\overline{D^*}$ in the dual graph. Considering that the odd-vertex pairing needs to include all odd-vertices, the simplest odd-vertex pairing includes only several simple paths, each path connects two odd-vertices, and odd-vertices connected by different paths are different (for example, {(c,i), (c,d), (d,j)} in FIG. 6 is a simple path connecting odd-vertices i and j). In addition, because the remained edges $\overline{E_C} \subseteq \overline{D}$ in the cut set are removed from the topological graph, a shortest path may be selected for the foregoing each path. In this way, $|\overline{D}|$ is attempted to be minimized, that is, $N_C = |\overline{E_C}|$ is minimized. This may be used as a starting point for solving the optimal suppression problem. To comprehensively consider a quantity of vertices $N_Q$ in the largest connected component, the shortest path may be relaxed in this solution: finding a solution to the optimal suppression problem by considering first k short paths. FIG. 7 is a schematic diagram of solving optimal suppression involved in this embodiment of this application. An algorithm for solving the optimal suppression shown in this application includes three steps:

Step 1: Vertex pairing.

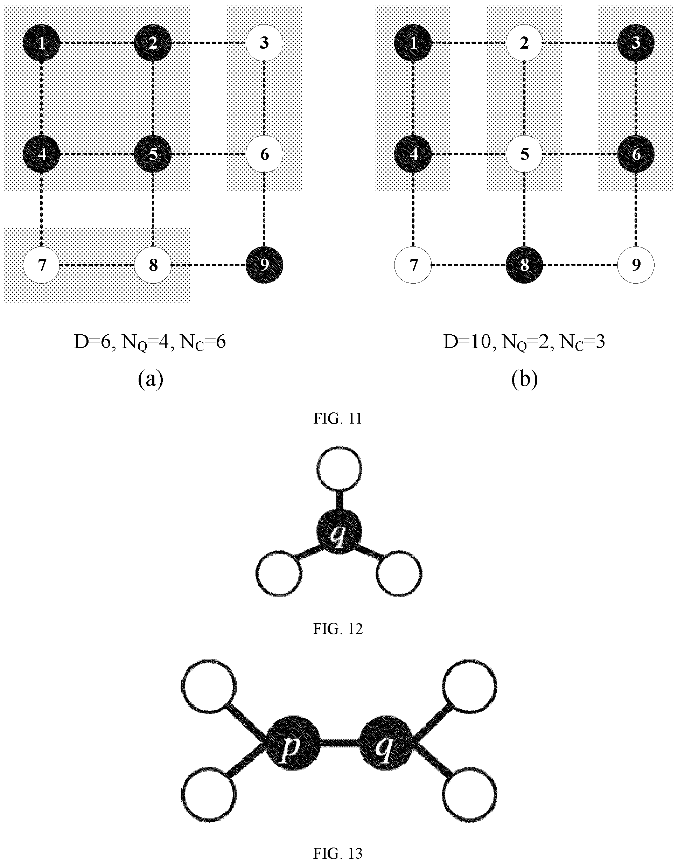

A complete graph with odd-vertices in a dual graph as vertices is constructed, where an edge weight of an edge $(u, v)$ is $M - d(u, v)$, $d(u, v)$ is a length of a shortest path between $u, v$, and $M = 1 + \max\{d(u, v)|u, v \text{ are odd - vertices}$ in the dual graph$\}$. A pairing solution is determined by using a maximum matching algorithm on the complete graph. In this way, odd-vertex matching that is obtained by using the shortest path and is between vertices matching each other includes a minimum quantity of paths. This may be used as a starting point for solving the problem. For example, for FIG. 11, a complete graph with vertices $i$ and $j$ as vertices is constructed, and an edge weight of $(i, j)$ is a length of a shortest path $(1 + 3) - 3 = 1$. Because there are only two vertices, the maximum matching is $\{(i, j)\}$.

Step 2: Path relaxation.

For each pair of matching vertices, first k short paths are sequentially attempted. For each attempt, $N_Q$ and $N_C$ are obtained, $\alpha N_Q + N_C$ is calculated, and a solution to the problem is found. For example, a shortest path between $i$ and $j$ is (1) $i \rightarrow c \rightarrow d \rightarrow j$, correspondingly $N_Q = 4$, $N_C = 3$, first 3 short paths are considered, including (2) $i \rightarrow c \rightarrow s \rightarrow d \rightarrow j$ and (3) $i \rightarrow c \rightarrow s \rightarrow l \rightarrow k \rightarrow j$, and different solutions are obtained according to different $\alpha$.

Step 3: Cut deriving.

According to the odd-vertex pairing obtained in step 2, dual edges corresponding to the odd-vertex pairing are removed from the topological graph, and a remaining graph is a bipartite graph. Therefore, a cut $C = (S, T)$ may be derived through vertex 2-coloring. For example, the three solutions (1), (2), and (3) obtained in step 2 sequentially correspond to (a), (b), and (c) in FIG. 11.

2) The quantum operations in the schedulable set include two-bit quantum operations.

In a possible implementation, in a case that the schedulable set includes two-bit quantum operations, the two-bit quantum operations are obtained from the schedulable set, to obtain a two-bit operation set; two operation groups are constructed based on two quantum operations that have a shortest distance in the two-bit operation set in a case that the two-bit operation set includes three or more operations; i times of operation addition are performed based on distances between quantum operations other than the two quantum operations in the two-bit operation set and the two operation groups, i being greater than or equal to 1, and i being an integer; and the candidate operation group is obtained based on a result of the i times of operation addition.

In this embodiment of this application, in a case that the schedulable set includes the two-bit quantum operations, the computer device may first schedule the two-bit quantum operations. That is, a qubit division solution is designed mainly based on the two-bit operations.

To increase the parallelism of the quantum operations as high as possible, the computer device may select to simultaneously execute operations in which the suppression effect is not reduced. In the quantum computing device, when two quantum operations that have a relatively short distance are simultaneously executed, the crosstalk suppression effect is generally reduced. However, if two quantum operations that have a relatively large distance are simultaneously executed, the crosstalk suppression effect is not greatly affected. Therefore, in this embodiment of this application, when the two-bit operation set includes three or more operations, the computer device may first select two two-bit quantum operations that have a shortest distance, divide the two two-bit quantum operations into different groups, to ensure that the two are not simultaneously executed, and then based on distances between operations out of the groups and corresponding operation groups, gradually expand a scale of the two groups, to obtain a candidate operation group with the parallelism as high as possible while ensuring the crosstalk suppression effect.

In a possible implementation, the performing i times of operation addition based on distances between quantum operations other than the two quantum operations in the two-bit operation set and the two operation groups includes: obtaining distances between the other quantum operations in the two-bit operation set and the two operation groups during a $j^{th}$ time of operation addition, $1 \leq j \leq i$, and j being an integer; adding a designated quantum operation corresponding to a maximum distance to a designated operation group corresponding to the maximum distance, the maximum distance being a maximum value of the distances between the other quantum operations and the two operation groups; obtaining a target odd-vertex pairing solution according to a first designated division manner based on the topological structure and the designated operation group; the target odd-vertex pairing solution including paths between odd-vertex pairs in a target dual graph, and the target odd-vertex pairing solution being configured to indicate the qubit division solution of the designated operation group; and the target dual graph being a dual graph of a topological graph, the topological graph being a planar graph of the topological structure; deleting the designated quantum operation from the two-bit operation set in a case that the target odd-vertex pairing solution meets a crosstalk suppression requirement; and executing a next operation addition process in a case that a quantity of the other quantum operations after the designated quantum operation is deleted is not 0.

In a possible implementation, the obtaining the candidate operation group based on a result of the at least one time of operation addition includes:

obtaining, in a case that a quantity of the other quantum operations after the $i^{th}$ time of operation addition is 0, or the target odd-vertex pairing solution obtained during the $i^{th}$ time of operation addition does not meet the crosstalk suppression requirement, an operation group including a maximum quantity of operations in the two operation groups after the $i^{th}$ time of operation addition as the candidate operation group.

In a possible implementation, the obtaining distances between the other quantum operations in the two-bit operation set and the two operation groups during a $j^{th}$ time of operation addition includes:

obtaining operation distances between a first quantum operation and quantum operations existing in a first operation group during the $j^{th}$ time of operation addition, the operation distances being configured to indicate a sum of lengths of shortest paths between qubits corresponding to two two-bit operations in the topological structure; and the first quantum operation being any one of the other quantum operations, and the first operation group being any one of the two operation groups; and

obtaining distances between the first quantum operation and the first operation group based on the operation distances between the first quantum operation and the quantum operations existing in the first operation group.

In this embodiment of this application, for two two-bit quantum operations $a = (a_1, a_2)$ and $b = (b_1, b_2)$, a distance between the two is defined as $D(a, b) = \Sigma_i \Sigma_j d(a_i, b_j)$, $d(a_i, b_j)$ representing a length of a shortest path between the qubits $a_i$ and $b_j$. A distance between the operation $a = (a_1, a_2)$ and one operation group G is defined as:

$$\min_{g \in G} D(a, g).$$

Because the topological structure of the quantum computing device may be represented by using a topological graph, the qubits corresponding to the operations in the operation group correspond to the vertices in the graph, and coupling relationships between the qubits correspond to the edges in the graph. Therefore, in this embodiment of this application, the computer device may search, in a manner of searching the dual graph of the topological graph for an odd-vertex pairing solution, for a qubit division solution that meets the crosstalk suppression requirement. In the process of gradually expanding two operation groups, to obtain a candidate operation group with the parallelism as high as possible, after one two-bit quantum operation is added to one operation group each time, that is, a target odd-vertex pairing solution is obtained based on the two-bit quantum operation in an operation group after the operation of addition and in combination with the topological structure of the quantum computing device, and whether the obtained target odd-vertex pairing solution meets the crosstalk suppression requirement is determined. If the obtained target odd-vertex pairing solution meets the crosstalk suppression requirement, addition continues to be performed. If the obtained target odd-vertex pairing solution does not meet the crosstalk suppression requirement, addition needs to be stopped. Addition is triggered to be stopped when the crosstalk suppression requirement is not met, or there is no two-bit quantum operation that needs to be added and the computer device may use one with a maximum quantity of quantum operations in the current two operation groups as the candidate operation group. Optionally, if quantities of quantum operations included in the current two operation groups are the same, one may be randomly selected as the candidate operation group.

In a possible implementation, the obtaining a target odd-vertex pairing solution according to a first designated division manner based on the topological structure and the designated operation group includes:

deleting edges corresponding to quantum operations in the designated operation group from the target dual graph; obtaining a complete graph with odd-vertices in the target dual graph as vertices; determining each odd-vertex pair in the complete graph; obtaining at least one odd-vertex pairing solution for the each odd-vertex pair, the odd-vertex pairing solution including a path of the each odd-vertex pair in the target dual graph; adding edges corresponding to the quantum operations in the designated operation group in the target dual graph to the at least one odd-vertex pairing solution; screening out odd-vertex pairing solutions in which qubits corresponding to the two-bit operations do not fall within the same connected area from the at least one odd-vertex pairing solution, to obtain each odd-vertex pairing solution after the screening out; obtaining a quantity of qubits in a largest area in the each screened odd-vertex pairing solution and a total quantity of insuppressible crosstalks in the each odd-vertex pairing solution after the screening out, the total quantity of insuppressible crosstalks being represented by a quantity of edges corresponding to paths in the odd-vertex pairing solution in the topological graph, the quantity of qubits in the largest area being represented by a quantity of vertices in a largest connected area in the topological graph after a cut set is removed, the cut set being a set of edges remained in the topological graph after the edges corresponding to the paths in the odd-vertex pairing solution in the topological graph are removed; obtaining a crosstalk suppression index of each of the odd-vertex pairing solutions after the screening out based on the quantity of qubits in the largest area in each of the odd-vertex pairing solutions after the screening out and the total quantity of insuppressible crosstalks in each of the odd-vertex pairing solutions after the screening out; and obtaining an odd-vertex pairing solution corresponding to a minimal crosstalk suppression index as the target odd-vertex pairing solution.

In a case that the schedulable set includes a two-bit quantum operation, the foregoing process of obtaining a qubit division solution based on the target odd-vertex pairing solution includes: removing edges corresponding to the target odd-vertex pairing solution from the topological graph, to obtain a topological graph after edge removal; and performing vertex 2-coloring on the topological graph after the edge removal, to obtain the qubit division solution (similar to the step of deriving the cut in step 3 of the optimal suppression algorithm in a case that the quantum operations in the foregoing schedulable set are single-bit quantum operations).

For the case in which the schedulable set includes a two-bit quantum operation, there are two qubits corresponding to the two-bit quantum operation. Therefore, if the qubits are divided directly according to the foregoing second designated division manner, two qubits corresponding to one two-bit quantum operation may be divided into different sets. Further, if a plurality of quantum operations are executed simultaneously, qubits involved in the operations need to belong to the same set in principle, but this point cannot be ensured in the second designated division manner. Therefore, this embodiment of this application is improved based on the foregoing second designated division manner, to be applicable to a qubit division scenario when a designated quantum operation is executed on a designated qubit. The improved division manner is the foregoing first designated division manner.

A case corresponding to the first designated division manner may be regarded as an optimal suppression problem with a constraint: qubits involved in a designated quantum operation are required to fall within the same set in a cut. In this solution, the problem with the constraint may be converted into an unconstrained problem by using a policy of "deleting edges first, adding edges later, and additional check", which is solved by using the method given in the foregoing second designated division manner. A set of bits involved in the operation is denoted by Q, the qubits in Q are required to fall within the same set in a cut.

Delete edges first: Delete edges $\{(u, v)^*|(u, v) \in E$ and $u, v \in Q\}$ in a dual graph.

Add edges later: After an odd-vertex pairing of a graph after the edges are deleted in step 2 is given, the edges that have just been deleted are added to the odd-vertex pairing.

Additional check: In some cases of the foregoing two steps, it cannot be ensured that all the qubits in Q are within the same set. Therefore, in step 2, each time a cut candidate is given, it is necessary to additionally check whether the candidate meets a condition of the same set, and if not, the candidate is discarded.

FIG. 8 is an exemplary diagram of solving an optimal suppression problem involved in this embodiment of this application. Assuming that a two-bit operation needs to be executed on qubits 11 and 28 in FIG. 8, $(11,28)^* = (i, j)$ is first deleted from the dual graph, an odd-vertex pairing $i \to c \to d \to j$ is obtained by using the optimal suppression algorithm given in the second designated division manner, $(i, j)$ is then added, and a cut is derived according to an odd-vertex pairing to which $(i, j)$ is added. A condition that both 11 and 28 are in the same set may be checked, and therefore may be used as a solution.

A topological graph G = $(V, E)$ and a vertex set Q $\subseteq$ V are given, an edge set $\{(u, v)^*|(u, v) \in E$ and $u, v \in Q\}$ constitutes several connected components $C_1, C_2, \cdots, C_n$ of the topological graph G, and the foregoing policy of "deleting edges first, adding the edges later" can ensure that the vertices within the same connected component are in the same set in the derived cut.

According to the foregoing conclusion, an edge set involved in a single two-bit quantum operation constitutes only one connected component (for example, the example in FIG. 8), and the policy of this solution can give a legal solution. For a plurality of two-bit quantum operations, an edge set involved in the plurality of two-bit quantum operations may constitute a plurality of connected components. In this case, "additional check" is required to ensure that qubits in different connected components fall within the same set.

A complete algorithm is summarized in Table 1 in this solution. The odd-vertex pairing formed by the first k short paths may be traversed by using search algorithms such as exhaustive search and beam search.

Table 1

| Algorithm 1: optimal suppression |
|---|
| Input: a topological graph G = $(V, E)$, and a qubit set Q involved in a to-be-executed operation. |
| Output: a qubit division solution S, T. |
| Deleting edges: Delete an edge set $\{(u, v)^*|(u, v) \in E$ and $u, v \in Q\}$ from a dual graph $G^*$. |
| 1) Vertex pairing: |
| Construct a complete graph with odd-vertices in a dual graph $G^*$ as vertices, where an edge weight of an edge $(u, v)$ is $M - d(u, v)$, $d(u, v)$ is a length of a shortest path between $u, v$, and $M = 1 + \max\{d(u,v)|u$ and $v$ are odd-vertices in the dual graph}. |
| An odd-vertex pairing solution is determined by using a maximum matching algorithm. |
| 2) Path relaxation: |
| For each matched vertex pair, generate first k short paths. |
| Traverse an odd-vertex pairing formed by the first k short paths: for each odd-vertex pairing: |
| Add edges: add deleted edges to a final odd-vertex pairing; and |

(continued)

| Algorithm 1: optimal suppression |
| --- |
| additional check: check whether qubits corresponding to to-be-executed operation belong to the same set. If not, discard this candidate; or |
| otherwise, calculate $N_Q$ and $N_C$. |
| The final odd-vertex pairing is a smallest one of $\alpha N_Q + N_C$. |
| 3) Cut deriving |
| Remove edges corresponding to the odd-vertex pairing from the topological graph G. |
| Perform vertex 2-coloring on a remaining graph, to obtain a qubit division solution C = (S, T). |

In a possible implementation, the crosstalk suppression requirement includes that:

a quantity of qubits in a largest area in the target odd-vertex pairing solution is less than a bit quantity threshold; and

a total quantity of insuppressible crosstalks in the target odd-vertex pairing solution is less than a total crosstalk quantity threshold.

In this embodiment of this application, when the two-bit quantum operations are scheduled, the execution parallelism needs to be increased as high as possible while meeting the crosstalk suppression requirement. In this application, the crosstalk suppression requirement may be a comprehensive restriction on the quantity of qubits $N_Q$ in the largest area and the total quantity of insuppressible ZZ crosstalks $N_C$. for example, requires that both are respectively less than specific thresholds.

The foregoing algorithm 1 corresponds to a case of determining an operation group including two-bit quantum operations, and outputting a qubit division solution corresponding to the operation group if the obtained target odd-vertex pairing solution meets the crosstalk suppression requirement. In the solution shown in this embodiment of this application, the computer device first needs to determine a candidate operation group that meets the crosstalk suppression requirement. That is, in the foregoing process of gradually expanding two operation groups, after one two-bit quantum operation is added to one operation group each time, that is, based on the two-bit quantum operation in an operation group after the operation of addition, steps of the vertex pairing and the path relaxation in the foregoing algorithm 1 are run, to obtain a corresponding target odd-vertex pairing solution, and whether the current operation group meets the crosstalk suppression requirement is then determined by using the target odd-vertex pairing solution.

In an exemplary solution, when the two-bit operation set includes only one quantum operation, the computer device may obtain the quantum operation as a candidate operation group.

In another exemplary solution, when the two-bit operation set includes two quantum operations, the computer device may first add the two quantum operations to the same operation group, and determine whether a suppression requirement is met. If yes, the computer device uses an operation group formed by the two quantum operations as a candidate operation group; or otherwise, the computer device uses an operation group formed by any one of the two quantum operations as a candidate operation group.

In a possible implementation, if the candidate operation group is an operation group extracted when the schedulable set includes the two-bit quantum operations, the computer device may obtain the target odd-vertex pairing solution according to a first designated division manner based on the topological structure, and then obtain a qubit division solution based on the target odd-vertex pairing solution (that is, re-execute the foregoing algorithm 1 based on the candidate operation group).

In another possible implementation, if the candidate operation group is the operation group extracted when the schedulable set includes the two-bit quantum operations, the computer device may alternatively directly obtain the target odd-vertex pairing solution obtained according to the foregoing first designated division manner in the foregoing process of extracting the candidate operation group, and then obtain a qubit division solution based on the target odd-vertex pairing solution.

In the solution shown in this embodiment of this application, for the execution of the quantum circuit, which operations are executed at particular time points need to be selected. That is, the quantum circuit is scheduled, and different schedule solutions lead to different crosstalk suppression effects and different execution parallelism. In the schedule method involved in this application, the two factors are comprehensively considered, and the execution parallelism of the circuit is increased as high as possible while implementing the optimal suppression. A procedure of a schedule algorithm involved in this application may be shown in Table 2.

Table 2

| Row number | Algorithm 2: quantum circuit schedule |
|---|---|
|  | Input: a quantum circuit and a topological graph; and<br>output: an operation execution solution. |
| 1 | Provided that there are unscheduled operations: |
| 2 |  |
| 3 | Construct a schedulable operation set $SG$: including all operations that are schedulable currently.<br>If the schedulable operation set includes only single-bit operations: |
| 4 | Divide qubits on a device into two sets $S, T$ by using an optimal suppression algorithm corresponding |
| 5 | to a second designated division manner, and S has more qubits than $T$ on which operations in $SG$ need to be executed. |
| 6 | Otherwise (there are two-bit operations):<br>It denotes that the two-bit operations in the schedulable operation set constitute a set $SG_2$. |
| 7 | Divide qubits given in $SG_2$ by using an algorithm 3 described in the following, this division is denoted by $S, T,$ and the qubits involved in the two-bit operations are within S. |
| 8 | Schedule to execute the set $S$: apply corresponding quantum operations to qubits with operations in the set S according to the schedulable operation set $SG,$ and apply identity quantum operations on qubits with no operations (reserving the set $T$ for next schedule). |
|  | Algorithm 3: schedule of two-bit operations |
|  | Input: a set of to-be-scheduled two-bit operations $SG_2$ and a suppression requirement.<br>Output: a qubit division solution $S, T.$ |
| 9 | Whether all operations can be simultaneously executed is checked: running an optimal |
| 10 | suppression algorithm corresponding to a first designated division manner for $SG_2$, to obtain a qubit division solution $S, T.$ |
| 11 12 | If the solution meets the suppression requirement: |
| 13 | return to the division solution S; or |
| 14 | otherwise: |
| 15 | select two operations $a, b$ that have a shortest distance in $SG_2$, which are separately grouped, and are denoted by groups $A = \{a\}, B = \{b\}$. |
| 16 | Provided that $SG_2$ is not empty: calculate distances between all the operations in $SG_2$ and the groups $A, B$. |
| 17 | Select operations that have a largest distance: it denotes that there is a largest distance between an operation c (one of the operations in $SG_2$) and a group G (where the group G is one of a group $A$ or $B$), and add the operation c to the group G. |
| 18 | Run the optimal suppression algorithm for the group G, and check whether the simultaneous |
| 19 | execution of the group G meets a suppression requirement: if no, delete c from G, and iteration ends; or<br>otherwise, remove c from $SG_2$, and continues the iteration.<br>Denote a group including a maximum quantity of operations in the groups $A, B$ by G.<br>Return the qubit division solution obtained by running the optimal suppression algorithm for the group G. |

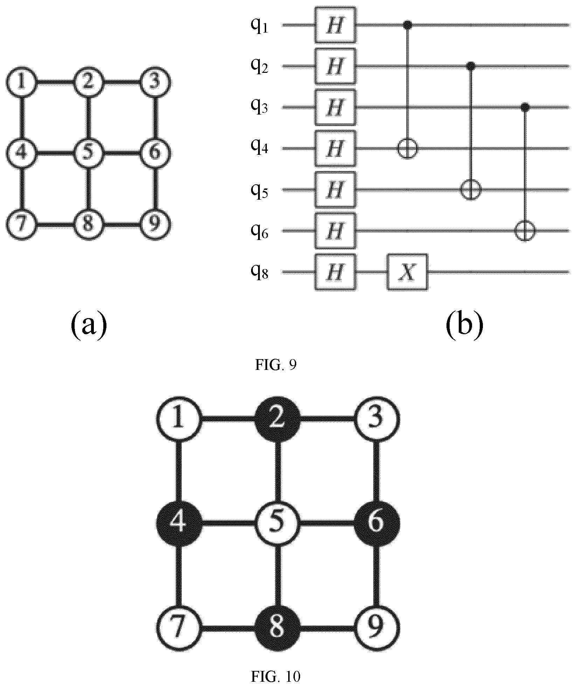

FIG. 9 is a schematic diagram of a quantum circuit involved in this embodiment of this application. A part (a) in FIG. 9 shows a topological structure of the quantum computing device, and a part (b) in FIG. 9 shows a to-be-executed quantum circuit. In this application, the algorithm shown in Table 2 is explained by using an example of executing the quantum circuit shown in FIG. 9. The quantum circuit is given, and a schedulable operation set (corresponding to row 2 in the algorithm in Table 2) is constructed. When and only when all operations depending on the foregoing have been executed according to data dependence, it may be considered that one operation may be scheduled to be executed. For example, in FIG. 9, when no operations are executed, the schedulable operation set is $\{H_1, H_2, \cdots, H_8\}$, and after all $H$ operations are executed, the schedulable operation set is $\{CNOT_{1,4}, CNOT_{2,5}, CNOT_{3,6}, X_8\}$. Types of operations in the schedulable operation set (row 3 and row 6) are then classified and discussed. If there are only single-bit operations, an execution solution is designed based on the following conclusion:

For a group of schedulable single-bit operations, the group of operations may be executed within at most two time steps in an optimal suppression manner. That is, if qubits may be divided into two sets $S, T$ by using the optimal suppression algorithm corresponding to the second designated division manner, and correspondingly the single-bit operations are also divided into the two sets, a waveform may be applied to S within a first time step, and a waveform may be applied to $T$ within a second time step, so that the execution is completed within at most two time steps.

For the circuit schedule algorithm shown in this application, the set including a maximum quantity of operations (corresponding to row 4 and row 5 in the algorithm in Table 2) is executed, and operations in another set may be reserved for subsequent schedule. In this manner, the highest parallelism is achieved with the best suppression effect.

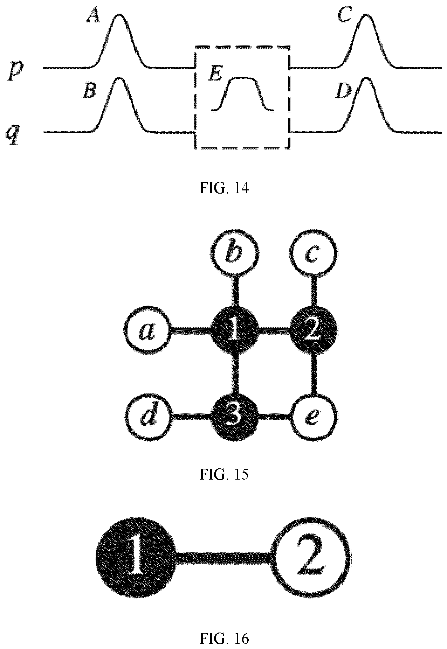

For example, FIG. 10 is a schematic diagram of a suppression solution involved in this embodiment of this application. For the topology in FIG. 15, the optimal suppression algorithm involved in this application gives the qubit division solution in FIG. 10. There are four H operations included on black vertices, and there are only three operations included on white vertices. Therefore, a set of black vertices is selected to be executed.

In another case, if a set of executable operations includes two-bit operations, the qubit division solution is involved mainly based on the two-bit quantum operations by using row 7 in the algorithm in Table 2 in the solution shown in this application.

For example, for all the $CNOT$ operations in FIG. 9, $D(CNOT_{1,4}, CNOT_{2,5}) = D(CNOT_{2,5}, CNOT_{3,6}) = 6$, and $D(CNOT_{1,4}, CNOT_{3,6}) = 10$. For the $CNOT$ operations in FIG. 9, FIG. 11 is a schematic diagram of differences in distance and suppression effect between different execution solutions involved in this embodiment of this application.

For two-bit quantum operations, in this application, two quantum operations that have a shortest distance are first selected, and are divided into different groups, to ensure that the two quantum operations are not simultaneously executed; and a scale of the two groups is then gradually expanded: sequentially selecting operations having a largest distance, until the suppression requirement is not met. For example, for the $CNOT$ operation in FIG. 9, $CNOT_{1,4}, CNOT_{2,5}$ that have the shortest distance are selected and divided into two groups: $A = \{CNOT_{1,4}\}$ and $B = \{CNOT_{2,5}\}$ For remaining $CNOT_{3,6}$, a distance from the $A$ group is greater than that from the $B$ group, and therefore $CNOT_{3,6}$ is added to the $A$ group, to finally obtain $A = \{CNOT_{1,4}, CNOT_{3,6}\}$ and $B = \{CNOT_{2,5}\}$.

For a group of executable two-bit quantum operations, an algorithm 3 is invoked for a plurality of times until operations in the group are all scheduled. If the group of operations is allocated to be executed in $K$ time steps, operations that have the first $K$ smallest distances from each other in the group of operations belong to different time steps. That is, in a case of measuring the suppression effect based on distance, an increase in an execution time (a decrease in the parallelism, and an increase in decoherence errors) can bring an improvement in the suppression effect. Because each time one time step is added, two operations that have a shortest distance are separately executed.

After the foregoing $A, B$ groups are given, a group with a maximum quantity of operations may be selected to be executed in this solution. For example, for the $CNOT$ operations in FIG. 9, the group $A = \{CNOT_{1,4}, CNOT_{3,6}\}$ is selected. In this case, the qubit division solution is shown in a part (b) in FIG. 11, and $CNOT_{1,4}, CNOT_{3,6}, X_8$ are finally executed according to a set of executable operations $\{CNOT_{1,4}, CNOT_{2,5}, CNOT_{3,6}, X_8\}$.

Step 304: Obtain the target operation group based on the candidate operation group and the qubit division solution.

In a possible implementation, the obtaining the target operation group based on the candidate operation group and the qubit division solution includes:

dividing the qubits in the quantum computing device into two qubit sets based on the qubit division solution; dividing the candidate operation group into operation subgroups respectively corresponding to the two qubit sets, qubits corresponding to quantum operations in the operation subgroups being within the qubit sets corresponding to the operation subgroups; and combining quantum operations in a target operation subgroup and filling operations into the target operation group, the target operation subgroup being an operation subgroup that includes a maximum quantity of quantum operations in the operation subgroups respectively corresponding to the two qubit sets; and the filling operation being an identity quantum operation corresponding to filling qubits, the filling qubits being qubits other than qubits corresponding to the target operation subgroup in a qubit set corresponding to the target operation subgroup.

In this embodiment of this application, for the two qubit sets corresponding to the obtained qubit division solution, the computer device may determine one qubit set corresponding to a relatively large quantity of operations in the quantum circuit in the two qubit sets as a target qubit set on which operations are executed. For other qubits in the target qubit set other than qubits corresponding to the operations in the quantum circuit, identity quantum operations may be filled on the other qubits, to achieve the optimal crosstalk suppression effect.

In a possible implementation, after the obtaining the target operation group based on the candidate operation group and the qubit division solution, the method further includes:

performing, in a case that there are still m unscheduled quantum operations in addition to the target operation group, an operation schedule based on the topological structure and the m unscheduled quantum operations, to obtain a new target operation group, m being greater than or equal to 1, and m being an integer; and

executing in parallel scheduled quantum operations included in the new target operation group on the quantum computing device.

In this embodiment of this application, after obtaining a target operation group in a time step each time, the computer device may determine whether there are still remaining unscheduled quantum operations in the quantum circuit. If yes, the foregoing step 301 to step 304 are re-executed based on the remaining unscheduled quantum operations, to obtain a target operation group in a next time step, and the computer device iteratively executes the foregoing step 301 to step 304, until all the quantum operations in the quantum circuit are scheduled.

Step 305: Execute in parallel the scheduled quantum operations included in the target operation group on the quantum computing device,

a control waveform of the scheduled quantum operation being generated based on a designated target, the designated target being configured to minimize an inter-area crosstalk in a case that the quantum operation is controlled to be undistorted, the inter-area crosstalk being a crosstalk between qubits falling within different connected areas, the connected areas being obtained through division on qubits in the quantum computing device according to whether a quantum operation being executed on the qubits.

In this embodiment of this application, for a to-be-executed quantum operation, the computer device optimizes a control waveform of the quantum operation while controlling the quantum operation being undistorted, so that an inter-area crosstalk is minimized.

In a possible implementation, the designated target is a single scalar target obtained based on the inter-area crosstalk and an average gate fidelity of quantum operations under an action of the control waveform.

In a possible implementation, a formula of the single scalar target is:

$$L = 1 - F\left(U(T), U_{Target}(T)\right) + \sum_{i=1}^{n} w_i \left\| U_{Xtalk}^{i}(T) - \mathbf{0} \right\|_F,$$

$L$ being the single scalar target, $U(T)$ representing a unitary transformation of a corresponding quantum operation under the action of the control waveform, $U_{Target}(T)$ representing a target unitary transformation of the corresponding quantum operation, $F\left(U(T), U_{Target}(T)\right)$ representing an average gate fidelity between $U(T)$ and $U_{Target}(T)$. and

$U_{Xtalk}^{i}(T)$ representing evolution of a closed quantum system under the impact of the inter-area crosstalk.

In a possible implementation, the computer device performs R times of iterative update on a function parameter of a control waveform function of a target quantum operation based on the single scalar target, R≥2 and R being an integer; the target quantum operation being any one of schedulable quantum operations and identity quantum operations; and

generates a control waveform of the target quantum operation based on a function parameter after the iterative update.

In this embodiment of this application, the computer device may perform a plurality of rounds of iterations on a parameter of a control waveform function of the to-be-executed quantum operation based on the single scalar target. During each round of iteration, based on the previous round of iteration, the parameter of the control waveform function is updated, until a quantity of iteration times is reached, or a change of the parameter is less than a specific threshold.

In a possible implementation, the performing R times of iterative update on a function parameter of a control waveform function of a target quantum operation based on the single scalar target includes:

obtaining first system evolution during an $r^{th}$ time of iteration, the first system evolution being evolution of a closed quantum system under impact of an $r^{th}$ control waveform; 2≤r≤R, and r being an integer; and the $r^{th}$ control waveform being a control waveform corresponding to the function parameter after a $(r-1)^{th}$ time of iterative update;

obtaining second system evolution based on the first system evolution, the second system evolution being evolution of a closed quantum system under impact of the inter-area crosstalk during the $r^{th}$ time of iteration;

obtaining the single scalar target during the $r^{th}$ time of iteration based on the second system evolution and an average gate fidelity of the target quantum operation under the action of the $r^{th}$ control waveform; and

updating the function parameter after the $(r-1)^{th}$ time of iterative update based on the single scalar target during the $r^{th}$ time of iteration, to obtain the function parameter after the $r^{th}$ time of iterative update.

In this embodiment of this application, the inter-area crosstalk may be a ZZ crosstalk between the areas, or may be another type of crosstalk.

For example, the inter-area crosstalk is the ZZ crosstalk. The solution for optimizing the waveform in this embodiment of this application aims to designing a waveform that can suppress the ZZ crosstalk while implementing the quantum operation when the quantum operation is given. In this solution, an area with only one single-bit operation is first considered, an area with only one two-bit operation is then considered, and an area including a plurality of the two types of operations is finally considered.

1) An area with only one single-bit operation.

FIG. 12 is a schematic diagram of a single-bit operation involved in this embodiment of this application. As shown in FIG. 12, in this solution, a ZZ crosstalk between a qubit q and surrounding qubits needs to be suppressed while a single-bit operation on the qubit q is implemented.

Effective Hamiltonian of the area may be written as:

$$H(t) = \Omega_x(t)\sigma_x^q + \Omega_y(t)\sigma_y^q + \sum_{i\in\{\text{out-of-area qubits having a coupling with } q\}} \lambda_i \sigma_z^q \otimes \sigma_z^i,$$

$\Omega_{x,y}(t)$ representing a control waveform, $\sigma_{x,y,z}^q$ representing a Pauli $X$/$Y$/$Z$ operation on the qubit q, an identity operation being omitted, $\sigma_z^q \otimes \sigma_z^i$ representing a ZZ crosstalk between the qubit q and $i$, and $\lambda_i$ representing an intensity.

$\lambda = \Sigma_i \lambda_i$ is taken, and the Hamiltonian may be sorted into:

$$H(t) = H_{Ctrl}(t) + \lambda H_{Xtalk},$$

where

$$H_{Ctrl}(t) = \Omega_x(t)\sigma_x^q + \Omega_y(t)\sigma_y^q,$$

$$H_{Xtalk} = \sigma_z^q \otimes \left(\sum_i \frac{\lambda_i}{\lambda}\sigma_z^i\right),$$

In this solution, appropriate waveforms may be selected for $\Omega_x(t)$ and $\Omega_y(t)$, to suppress the impact of the ZZ crosstalk $H_{Xtalk}$.

2) An area with only one two-bit operation.

FIG. 13 is a schematic diagram of a two-bit operation involved in this embodiment of this application. As shown in FIG. 13, in this solution, a ZZ crosstalk between qubits $p$, $q$ and surrounding qubits needs to be suppressed while a two-bit operation on the qubits $p$, $q$ is implemented.

Effective Hamiltonian of the area may be written as:

$$H(t) = \overbrace{\Omega(t)H_{Coupling}}^{H_{Ctrl}(t)} + \overbrace{\sum_{\substack{i\in \\ \{\text{out-of-area qubits} \\ \text{having a coupling with } p\}}} \lambda_i\sigma_z^p \otimes \sigma_z^i + \sum_{\substack{j\in \\ \{\text{out-of-area qubits} \\ \text{having a coupling with } q\}}} \lambda_j\sigma_z^q \otimes \sigma_z^j}^{\lambda H_{Xtalk}} + \overbrace{\lambda_{pq}\sigma_z^p \otimes \sigma_z^q}^{\lambda' H_{Inner-Xtalk}},$$

$\lambda = \Sigma_i\lambda_i + \Sigma_j \lambda_j$, and $\lambda' = \lambda_{pq}$. $H_{Coupling}$ is a form of coupling between qubits. For example, a CNOT operation may be implemented by using $H_{Coupling} = \sigma_z^p \otimes \sigma_x^q$, and an iSWAP operation may be implemented by using

$$H_{Coupling} = \sigma_x^p \otimes \sigma_x^q + \sigma_y^p \otimes \sigma_y^q$$ . The impact of the inter-area ZZ crosstalk $H_{Xtalk}$ can be suppressed by selecting an appropriate waveform for $\Omega(t)$. However, this method requires hardware to have a relatively strong capability for adjusting the coupling $H_{Coupling}$ between the two bits. FIG. 14 is a schematic diagram of a single-bit waveform involved in this embodiment of this application. If the hardware cannot provide the capability, the single-bit waveform shown in FIG. 14 may be used for assistance.

As shown in FIG. 14, waveforms A and C are single-bit control waveforms applied to a qubit p; waveforms B and D are single-bit control waveforms applied on a qubit q; and a waveform E is a waveform applied to a coupling term $H_{Coupling}$.

Hamiltonian for describing the control waveform is:

$$H_{Ctrl}(t) = \sum_{i=A,C}\left[\Omega_x^i(t)\sigma_x^p + \Omega_y^i(t)\sigma_y^p\right] + \sum_{i=B,D}\left[\Omega_x^i(t)\sigma_x^q + \Omega_y^i(t)\sigma_y^q\right] + \Omega^E(t)H_{Coupling},$$

During optimization, only the waveforms A to D are optimized, and a waveform originally used for implementing two-bit operations is directly used for E. In this manner, the waveforms A to D are introduced to suppress the ZZ crosstalk while it is ensured that the waveform E is implementable by the hardware.

3) Waveform optimization.

It can be learned from the foregoing description that regardless of the case of the single-bit operation or the two-bit operation, the Hamiltonian part may be written as:

$$H(t) = H_{Ctrl}(t) + \lambda H_{Xtalk},$$

$H_{Ctrl}(t)$ being a controllable part, used for implementing the single/two-bit operation, $H_{Xtalk}$ being the inter-area crosstalk to be suppressed, and $\lambda$ being a crosstalk intensity. First, the following conclusion is given:

The closed quantum system performs evolution according to $H(t) = H_{Ctrl}(t) + \lambda H_{Xtalk}$, and a unitary transformation corresponding to the evolution may be written as:

$$U(t) = U_{Ctrl}(t)U_{Xtalk}(t),$$

$U_{Ctrl}(t)$ being defined by

$$i\dot{U}_{Ctrl}(t) = H_{Ctrl}(t)U_{Ctrl}(t)$$

which represents evolution of the system under the control waveform.

$U_{Xtalk}(t)$ represents evolution of the system under the impact of the crosstalk. $U_{Xtalk}(t)$ may be written as an expression of the crosstalk intensity $\lambda$:

$$U_{Xtalk}(t) = U_{Xtalk}^0(t) + \sum_{i=1}^{\infty} \lambda^i U_{Xtalk}^i(t),$$

If it denotes

$$H_{Xtalk}^C(t) = U_{Ctrl}^{\dagger}(t)H_{Xtalk}U_{Ctrl}(t),$$

$$\begin{cases} U_{Xtalk}^0(t) = I \\ U_{Xtalk}^1(t) = -i\int_0^t H_{Xtalk}^C(t_1)\,dt_1 \\ \vdots \\ U_{Xtalk}^n(t) = -i\int_0^t H_{Xtalk}^C(t_1)\cdot U_{Ctrl}^{n-1}(t_1)\,dt_1 \end{cases},$$

It can be learned from the foregoing conclusion that when $U_{Xtalk}^i(t), i \geq 1$ are all 0,

$U(t) = U_{Ctrl}(t)U_{Xtalk}(t) = U_{Ctrl}(t)U_{Xtalk}^0(t) = U_{Ctrl}(t)$ . That is, the impact of the crosstalk is completely eliminated. In a possible implementation solution of this application, the impact of the first n-order of $\lambda$ may be selected to be eliminated. In this case, the problem of crosstalk suppression of the n-order may be summarized as the following multi-objective optimization problem:

$$\underset{\Omega(t)}{\text{minimize}} \begin{cases} \left\| U_{Xtalk}^1(T) - \mathbf{0} \right\| \\ \vdots \\ \left\| U_{Xtalk}^n(T) - \mathbf{0} \right\| \end{cases},$$

$$\text{subject to } U(T) = U_{Target}(T),$$

$T$ representing a duration of an operation, and $U_{Target}$ ($T$) representing a target operation to be implemented.

In this solution, the problem is further converted into a single scalar target multi-parameter optimization problem, for example, it may be solved by using a gradient descent method. This process is as follows:

First, a function with a parameter is selected for the waveform $\Omega(t)$. For example, a form of a sum of cosine functions of $N$ different frequencies is selected:

$$\Omega(\mathbf{A}, t) = \sum_{i=1}^N \frac{A_i}{2}\left[1 + \cos\left(\frac{2\pi i}{T} - \pi\right)\right],$$

$A = (A_1, A_2, ..., A_N)$ being to-be-optimized parameters, and $T$ being a total time of the waveform.

Second, the following single scalar target is constructed:

$$L = 1 - F\left(U(T), U_{Target}(T)\right) + \sum_{i=1}^n w_i \left\| U_{Xtalk}^i(T) - \mathbf{0} \right\|_F,$$

$F(U, V)$ representing an average gate fidelity between operations $U$ and $V$, $\|X\|_F = \sqrt{\sum_{i,j} X_{ij}^2}$ being a Frobenius-norm (F-norm) of a matrix $X$, and $w_i$ being a weight coefficient, and being generally between $10^{-3} \sim 10^{-5}$.

During solving, in this solution, $U_{Ctrl}(t)$ at each moment may be obtained by solving a Schrodinger equation, $U_{Xtalk}^i(t)$ is then obtained by using a method of numerical integration, and $L$ is finally obtained. $\frac{\partial L}{\partial A}$ is obtained by a method of numerical derivation, and the parameter A is updated by the gradient descent method.

4) An area including a plurality of single/two-bit operations.

When the area includes the plurality of single/two-bit operations, similar to the foregoing situation, effective Hamiltonian of the area may be written as:

$$H(t) = H_{Ctrl}(t) + \lambda H_{Xtalk} + \lambda' H_{Inner-Xtalk},$$

$\lambda$ representing an equivalent intensity of an inter-area ZZ crosstalk, and $\lambda'$ representing an equivalent intensity of an intra-area ZZ crosstalk.

In this case, to suppress the inter-area crosstalk, there is no need to re-optimize the waveform, as long as the waveform optimized according to the foregoing method is applied to the corresponding operation. For example, FIG. 15 is a schematic diagram of a single-bit operation and a two-bit operation. FIG. 15 shows an area including a single-bit operation (3) and a two-bit operation (1 and 2) and a coupling around the area. Effective Hamiltonian of the area may be written as:

$$H(t) = \left[H_{Ctrl}^3(t) + \sum_{i\in\{d,e\}} \lambda_{3i}\sigma_z^3 \otimes \sigma_z^i\right] + \left[H_{Ctrl}^{1,2}(t) + \sum_{i\in\{a,b\}} \lambda_{1i}\sigma_z^1 \otimes \sigma_z^i + \sum_{i\in\{c,e\}} \lambda_{2i}\sigma_z^2 \otimes \sigma_z^i\right] +$$
$$\lambda' H_{Inner-Xtalk}.$$

Compared with the Hamiltonian in the foregoing case, it can be learned that an optimized single-bit operation waveform ( $H_{Ctrl}^1(t)$ ) is applied to a qubit 3, to suppress a crosstalk of 3-d ($\sigma_z^3 \otimes \sigma_z^d$) and 3-e ($\sigma_z^3 \otimes \sigma_z^e$), and an optimized two-bit operation waveform is applied to 1 and 2, to suppress crosstalks of 1-a, 1-b, 2-c, and 2-e, thereby suppressing all inter-area crosstalks. That is, all the inter-area crosstalks can be suppressed by independently applying the optimized waveforms, and this feature ensures the scalability of the solution shown in this application: an area in any shape is scalable, provided that the area with only one single/two-bit operation is optimized.

Improvements brought by the solution shown in this application are described by using computer simulation experiments in subsequent content of this application. First, suppression effects of the waveform in the related technology and the optimized waveform involved by using this solution on the ZZ crosstalk are compared and analyzed, and improvements of the solution in this application to the solution in the related technology on quantum computing tasks are then compared and analyzed.

1. Suppression effect of a waveform on a ZZ crosstalk.

1) Single-bit waveform.

In the solution shown in the related technology, the single-bit operation is generally implemented by using a Gaussian waveform. In this solution, the single-bit operation is implemented through superimposition of *N*-term cosine waveforms, N = 5.

To describe the suppression effect of the single-bit waveform on the ZZ crosstalk, FIG. 16 is a diagram of a topology of a single-bit waveform involved in this embodiment of this application. In the topology shown in FIG. 16, a waveform is applied to a qubit 1 to implement a specific operation. If a ZZ crosstalk is suppressed, states of a qubit 2 before and after the waveform is applied are consistent.

In this application, the suppression effect of a waveform on the ZZ crosstalk may be described by using a difference between states of the qubit 2 before and after the waveform is applied. The difference between the states is described by using an infidelity, and the infidelity of the two states is defined as:

$$\text{Infidelity}(|\alpha\rangle, |\beta\rangle) = 1 - \sqrt{\langle\alpha|\beta\rangle\langle\beta|\alpha\rangle},$$

$\langle\alpha|\beta\rangle$ being an inner product between $|\alpha\rangle$ and $|\beta\rangle$.

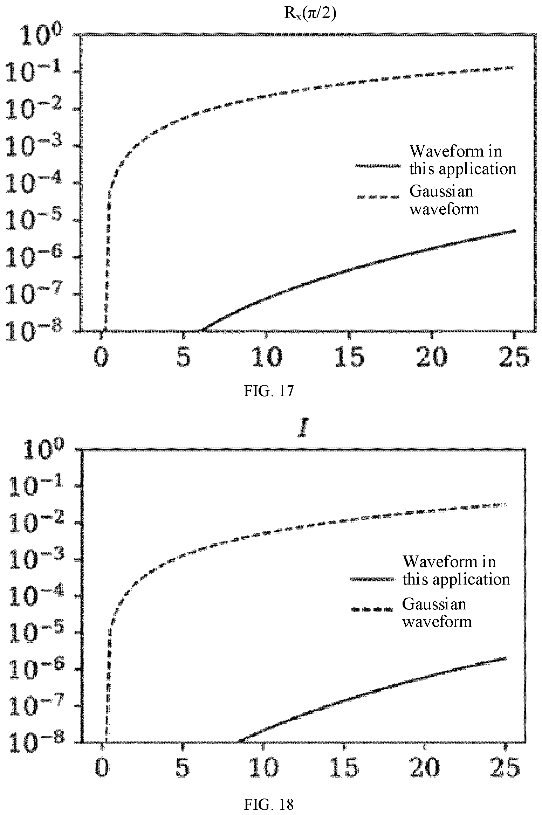

FIG. 17 is a schematic diagram of a case of crosstalk suppression involved in this embodiment of this application. FIG. 18 is a schematic diagram of another case of crosstalk suppression involved in this embodiment of this application. FIG. 17 shows a case of crosstalk suppression when a $R_x(\pi/2)$ operation is implemented on a qubit 1. FIG. 18 shows a case of crosstalk suppression when an identity *I* operation is implemented. A horizontal axis represents different crosstalk intensities, and a vertical axis represents crosstalk suppression effects measured by using infidelities. A lower infidelity indicates a better crosstalk suppression effect.

Through comparative analysis of FIG. 17 and FIG. 18, the following result may be obtained:
Compared with a Gaussian waveform, the suppression effect on a ZZ crosstalk is improved by 4 to 5 orders of magnitude by using an optimized waveform involved in this solution.

All the optimized waveforms involved in the solution shown in this application have strong suppression effects on crosstalks with different intensities. For example, an infidelity $10^{-8}$ is used as a standard, a crosstalk within 6MHz can be suppressed by using $R_x(\pi/2)$ optimized according to the solution, and a crosstalk within 8MHz can be suppressed by using the *I* waveform optimized according to this solution. Considering that the ZZ crosstalk observed through experiments is generally less than 1 MHz, it can be said that strong suppression on the ZZ crosstalk is implemented in this solution.

2) Two-bit waveform.

In the solution in the related technology, the two-bit operation is generally implemented by generally using a flat-topped Gaussian waveform. In this solution, a coupling of a $\sigma_x \otimes \sigma_x$ type is considered, and the two-bit operation is implemented by directly applying a waveform to a coupling item. In this solution, superimposition of *N*-term cosine waveforms is used, N = 5.

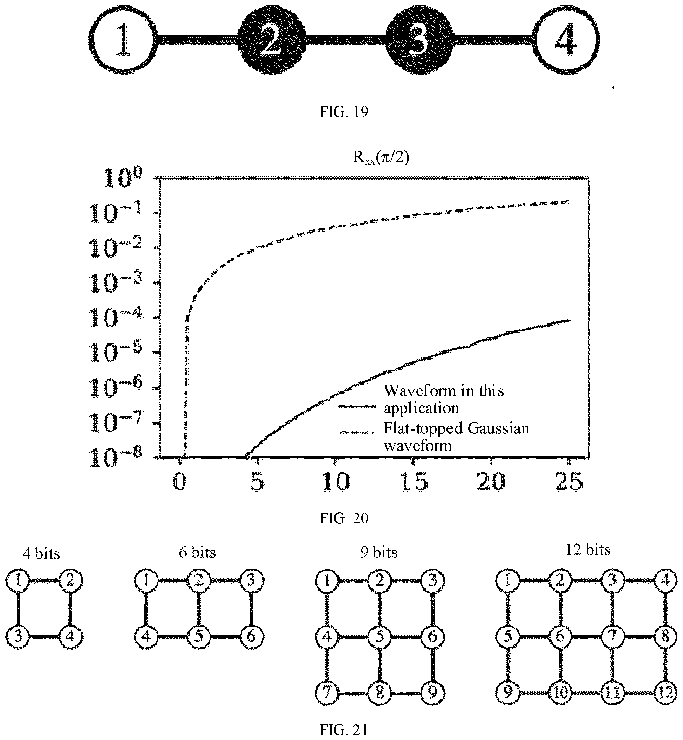

To describe the suppression effect of the two-bit waveform on the ZZ crosstalk, FIG. 19 is a diagram of a topology of a two-bit waveform involved in this embodiment of this application. In the topology shown in FIG. 19, a waveform is applied to qubits 2 and 3 to implement a specific operation. If a ZZ crosstalk is suppressed, states of qubits 1 and 4 before and after the waveform is applied are consistent. Therefore, suppression effects are described by using infidelities of the states of the qubits 1 and 4 before and after the waveform is applied.

FIG. 20 is a schematic diagram of a comparison between suppression effects on a ZZ crosstalk during implementation of a $R_{xx}(\pi/2)$ operation. Through the analysis of FIG. 20, a result similar to that of the single-bit waveform may be obtained:

Compared with a flat-topped Gaussian waveform, the suppression effect on a ZZ crosstalk is improved by 4 to 5 orders of magnitude by using an optimized waveform involved in this solution. That is, all the optimized waveforms involved in the solution shown in this application have strong suppression effects on crosstalks with different intensities.

In summary, strong suppression on the ZZ crosstalk is implemented in both the single-bit operation and the two-bit operation in a simple and unified manner in this solution.

2. Improvements in quantum computing tasks.

In this application, a hidden-shift (HS) algorithm, a Bernstein-Vazirani (BV) algorithm, quantum Fourier transform (QFT), Ising model simulation, and quantum volume (QV) estimation are used as quantum computing tasks. FIG. 21 shows a grid topology involved in this embodiment of this application. Computer simulation is performed on the grid topology shown in FIG. 21. There is a ZZ crosstalk between two adjacent bits in a topological graph, and an intensity of the ZZ crosstalk is set to 200 kHz according to an experiment result.

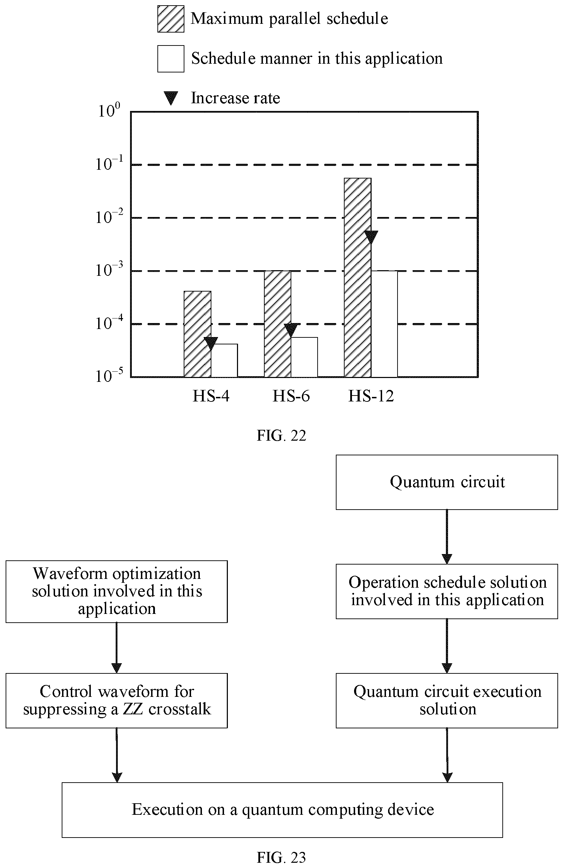

This application provides a comparison between a quantum operation schedule solution and maximum parallel schedule, and the schedule manner involved in this application is denoted by X-suppressed schedule. FIG. 22 is a schematic diagram of a comparison between the two schedule manners.

In FIG. 22, on different quantum computing tasks, the schedule manner (the X-suppressed schedule) provided in this application has a significant improvement compared with the maximum parallel schedule.

A horizontal axis in FIG. 22 indicates that: HS-4 represents a hidden shift algorithm for 4 bits, and the rest is deduced by analogy.

The following result may be obtained from FIG. 22:

Compared with the maximum parallel schedule, the method provided in this application greatly reduces the impact of the ZZ crosstalk on the quantum computing tasks. On the quantum computing tasks evaluated in this application, the method provided in this application is improved by 10~110 times compared with the original method.

The method provided in this application has good scalability: as a quantity of qubits used in the quantum computing tasks increases, the improvement brought by the method provided in this application also increases. The method provided in this application is not only applicable to a quantum computing device with a current relatively small quantity of qubits, but also is applicable to a quantum computing device with a future large scale.

The waveform optimization solution involved in this application has no requirement for the form of crosstalk $H_{Xtalk}$. In addition to applying to the ZZ crosstalk, if there are other types of crosstalk, the method in this application is also applicable by replacing $H_{Xtalk}$ with a corresponding form. Similarly, the foregoing "optimal suppression" algorithm and the quantum operation schedule algorithm are also applicable to other crosstalks.

The waveform optimization method involved in this application is finally summarized for solving a multi-objective optimization problem. The solving method for converting the problem into single scalar target multi-parameter optimization is given in the foregoing embodiments. The gradient descent method in this method may be replaced with another optimization method, such as a Nelder-Mead (NM) algorithm or a Broyden-Fletcher-Goldfarb-Shanno (BFGS) algorithm. In addition, other multi-objective optimization algorithms, such as a genetic algorithm and simulated annealing, may alternatively be used for solving this problem.

The solution shown in this application may be used to suppress the impact of the ZZ crosstalk existing in the device on computation when the quantum circuit is executed on the superconducting quantum computing device, thereby improving the fidelity of the computation. FIG. 23 is a schematic diagram of executing a quantum circuit involved in this embodiment of this application. As shown in FIG. 23, the quantum operation schedule method involved in this application may be used to process the quantum circuit, to generate a quantum circuit execution solution. The waveform optimization method involved in this application is used to generate a corresponding control waveform for execution of the quantum operations involved in this solution. According to the quantum circuit execution solution, the quantum computing device is controlled by using the control waveform, thereby suppressing the impact of the ZZ crosstalk on computation while executing the quantum circuit on the quantum computing device.

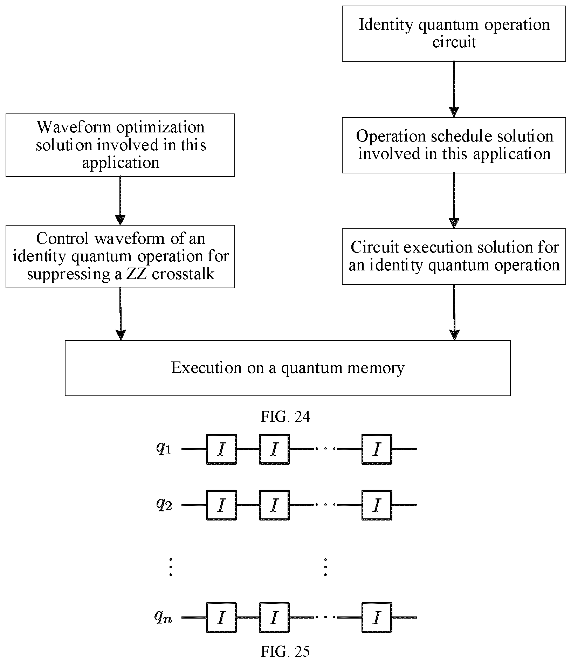

This application may alternatively be used to improve the quantum memory, suppress the ZZ crosstalk existing in the quantum memory device, and increase a data storage time of the quantum memory. Referring to FIG. 24 and FIG. 25, FIG. 24 is a schematic diagram of a quantum memory involved in this embodiment of this application. FIG. 25 is a schematic diagram of an identity quantum circuit involved in this embodiment of this application. As shown in FIG. 24 and FIG. 25, refresh operations in the quantum memory are equivalent to executing the identity quantum circuit on the quantum memory.

In summary, in the solution shown in this embodiment of this application, for a quantum operation corresponding to a quantum computing device, in a case that it is ensured that the quantum operation is undistorted, a control waveform for minimizing an inter-area crosstalk generated when the quantum operation is executed on the quantum computing device is obtained, and the quantum operation is executed on the quantum computing device based on the control waveform, thereby suppressing, in a manner of optimizing the control waveform of the quantum operation, the inter-area crosstalk caused by the quantum operation. Because any type of quantum operation may be optimized by using a control waveform, this solution can implement crosstalk suppression on any type of quantum operation, and improve the applicability of the crosstalk suppression, thereby improving the effect of the crosstalk suppression.

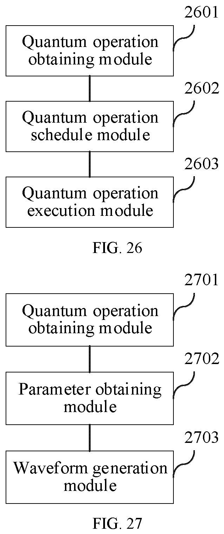

FIG. 26 is a block diagram of a quantum operation execution apparatus according to an embodiment of this application. The apparatus has functions of implementing the foregoing method embodiments. The functions may be implemented by hardware, or may be implemented by hardware executing corresponding software. The apparatus may be the computer device described above, or may be disposed in the computer device. As shown in FIG. 26, the apparatus may include:

a quantum operation obtaining module 2601, configured to obtain n unscheduled quantum operations corresponding to a quantum circuit, n being greater than or equal to 1, and n being an integer;

a quantum operation schedule module 2602, configured to perform an operation schedule based on a topological structure of a quantum computing device and the n unscheduled quantum operations, to obtain a target operation group, the target operation group including a plurality of scheduled quantum operations; and

a quantum operation execution module 2603, configured to execute in parallel the scheduled quantum operations included in the target operation group on the quantum computing device,

a control waveform of the scheduled quantum operation being generated based on a designated target, the designated target being configured to minimize an inter-area crosstalk in a case that the quantum operation is controlled to be undistorted, the inter-area crosstalk being a crosstalk between qubits falling within different connected areas, the connected areas being obtained through division according to whether a quantum operation being executed on qubits in the quantum computing device.

In a possible implementation, the quantum operation schedule module 2602 includes:

a schedulable set obtaining submodule, configured to obtain a schedulable set based on the n unscheduled quantum operations, the schedulable set including schedulable quantum operations in the n unscheduled quantum operations;

a candidate operation group extraction submodule, configured to extract a candidate operation group from the schedulable set;

a division solution obtaining submodule, configured to obtain a qubit division solution, the qubit division solution being obtained based on the topological structure according to a designated division manner; and the qubit division solution indicating that the qubits in the quantum computing device are divided into two qubit sets, to form at least two connected areas on the quantum computing device; and

a target operation group obtaining submodule, configured to obtain the target operation group based on the candidate operation group and the qubit division solution.

In a possible implementation, the apparatus further includes:
the quantum operation schedule module 2602 is further configured to perform, in a case that there are still m unscheduled quantum operations in addition to the target operation group, an operation schedule based on the topological structure and the m unscheduled quantum operations, to obtain a new target operation group, m being greater than or equal to 1, and m being an integer.

The quantum operation execution module 2603 is further configured to execute in parallel the scheduled quantum operations included in the new target operation group on the quantum computing device.

In a possible implementation, the candidate operation group extraction submodule including:

a two-bit operation set obtaining unit, configured to obtain, in a case that the schedulable set includes two-bit quantum operations, the two-bit quantum operations in the schedulable set, to obtain a two-bit operation set;

an operation group construction unit, configured to construct two operation groups based on two quantum operations that have a shortest distance in the two-bit operation set in a case that the two-bit operation set includes three or more operations;

an operation addition unit, configured to perform i times of operation addition based on distances between quantum operations other than the two quantum operations in the two-bit operation set and the two operation groups, i being greater than or equal to 1, and i being an integer; and

a candidate operation group obtaining unit, configured to obtain the candidate operation group based on a result of the i times of operation addition.

In a possible implementation, the operation addition unit is configured to:

obtain distances between the two operation groups and the other quantum operations in the two-bit operation set during a $j^{th}$ time of operation addition, $1 \leq j \leq i$, and j being an integer;

add a designated quantum operation corresponding to a maximum distance into a designated operation group corresponding to the maximum distance, the maximum distance being a maximum value among the distances between the two operation groups and the other quantum operations;

obtain a target odd-vertex pairing solution according to a first designated division manner based on the topological structure and the designated operation group, the target odd-vertex pairing solution including paths between odd-vertex pairs in a target dual graph, and the target odd-vertex pairing solution being configured to indicate the qubit division solution of the designated operation group; and the target dual graph being a dual graph of a topological graph, the topological graph being a planar graph of the topological structure;

delete the designated quantum operation from the two-bit operation set in a case that the target odd-vertex pairing solution meets a crosstalk suppression requirement; and

execute a next operation addition process in a case that a quantity of the other quantum operations after the designated quantum operation is deleted is not 0.

In a possible implementation, the candidate operation group obtaining unit is configured to obtain, in a case that a quantity of other quantum operations after the $i^{th}$ time of operation addition is 0, or the target odd-vertex pairing solution obtained during the $i^{th}$ time of operation addition does not meet the crosstalk suppression requirement, an operation group including a maximum quantity of operations in the two operation groups after the $i^{th}$ time of operation addition as the candidate operation group.
In a possible implementation, in obtaining a target odd-vertex pairing solution according to a first designated division manner based on the topological structure and the designated operation group, the operation addition unit is configured to:

delete edges corresponding to quantum operations in the designated operation group from the target dual graph;

obtain a complete graph with odd-vertices in the target dual graph as vertices;

determine odd-vertex pairs in the complete graph;

obtain at least one odd-vertex pairing solution for the odd-vertex pairs, the odd-vertex pairing solution comprising a path of each of the odd-vertex pairs in the target dual graph;

add the edges corresponding to the quantum operations in the designated operation group in the target dual graph into the at least one odd-vertex pairing solution;

screen out odd-vertex pairing solutions in which qubits corresponding to the two-bit operations do not fall within a same connected area from the at least one odd-vertex pairing solution, to obtain odd-vertex pairing solutions after the screening out;

obtain a quantity of qubits in a largest area in each of the odd-vertex pairing solutions after the screening out and a total quantity of insuppressible crosstalks in each of the odd-vertex pairing solutions after the screening out, the total quantity of insuppressible crosstalks being represented by a quantity of edges corresponding to paths in the odd-vertex pairing solution in the topological graph; the quantity of qubits in the largest area being represented by a quantity of vertices in a largest connected area in the topological graph after a cut set is removed, the cut set being a set of edges remained in the topological graph after the edges corresponding to the paths in the odd-vertex pairing solution in the topological graph are removed;

obtain a crosstalk suppression index of each of the odd-vertex pairing solutions after the screening out based on the quantity of qubits in the largest area in each of the odd-vertex pairing solutions after the screening out and the total quantity of insuppressible crosstalks in each of the odd-vertex pairing solutions after the screening out; and

obtain an odd-vertex pairing solution corresponding to a minimal crosstalk suppression index as the target odd-vertex pairing solution.

**In** a possible implementation, the crosstalk suppression requirement includes that:

a quantity of qubits in a largest area in the target odd-vertex pairing solution is less than a bit quantity threshold; and

a total quantity of insuppressible crosstalks in the target odd-vertex pairing solution is less than a total crosstalk quantity threshold.

In a possible implementation, in obtaining distances between the two operation groups and the other quantum operations in the two-bit operation set during a $j^{th}$ time of operation addition, the operation addition unit is configured to:

obtain operation distances between a first quantum operation and quantum operations existing in a first operation group during the $j^{th}$ time of operation addition, the operation distances being configured to indicate a sum of lengths of shortest paths between qubits corresponding to two two-bit operations in the topological structure; and the first quantum operation being any one of the other quantum operations, and the first operation group being any one of the two operation groups; and

obtain distances between the first quantum operation and the first operation group based on the operation distances between the first quantum operation and the existing quantum operations in the first operation group.

In a possible implementation, the candidate operation group extraction submodule is configured to obtain the schedulable set as the candidate operation group in a case that quantum operations in the schedulable set are single-bit quantum operations; and

the division solution obtaining submodule includes:

a pairing solution obtaining unit, configured to obtain a target odd-vertex pairing solution according to a second designated division manner based on the topological structure;

an edge removal unit, configured to remove edges corresponding to the target odd-vertex pairing solution from the topological graph, to obtain a topological graph after edge removal; and

a coloring unit, configured to perform vertex 2-coloring on the topological graph after the edge removal, to obtain the qubit division solution.

In a possible implementation, the pairing solution obtaining unit is configured to:

obtain a complete graph, vertices in the complete graph being odd-vertices in a target dual graph, the target dual graph being a dual graph of a topological graph, the topological graph being a planar graph of the topological structure of the quantum computing device;

determine paired odd-vertex pairs in the complete graph;

obtain at least one odd-vertex pairing solution for the odd-vertex pairs, the odd-vertex pairing solution comprising a path of each of the odd-vertex pairs in the target dual graph;

obtain a quantity of qubits in a largest area in each of the at least one odd-vertex pairing solution and a total quantity of insuppressible crosstalks in each of the at least one odd-vertex pairing solution, the total quantity of insuppressible crosstalks being represented by a quantity of edges corresponding to paths in the odd-vertex pairing solution in the topological graph; the quantity of qubits in the largest area being represented by a quantity of vertices in a largest connected area in the topological graph after a cut set is removed, the cut set being a set of edges remained in the topological graph after the edges corresponding to the paths in the odd-vertex pairing solution in the topological graph are removed;

obtain a crosstalk suppression index of each of the at least one odd-vertex pairing solution based on the quantity of qubits in the largest area in each of the at least one odd-vertex pairing solution and the total quantity of insuppressible crosstalks in each of the at least one odd-vertex pairing solution; and

obtain an odd-vertex pairing solution corresponding to a minimal crosstalk suppression index as the target odd-vertex pairing solution.

In a possible implementation, in obtaining the at least one odd-vertex pairing solution for each of the odd-vertex pairs, the operation addition unit or the pairing solution obtaining unit is configured to:

obtain first k short paths of each odd-vertex pair in the complete graph, k≥1, and k being an integer; and

combine the first k short paths of each odd-vertex pair in the complete graph, to obtain at least one odd-vertex pairing solution.

In a possible implementation, the crosstalk suppression index is: $\alpha N_Q + N_C$,
$N_Q$ representing the quantity of qubits in the largest area, $N_C$ representing the total quantity of insuppressible crosstalks, and $\alpha$ representing importance of $N_Q$ and $N_C$.
In a possible implementation, the target operation group obtaining submodule is configured to:

divide the qubits in the quantum computing device into two qubit sets based on the qubit division solution;

divide the candidate operation group into operation subgroups respectively corresponding to the two qubit sets, qubits corresponding to quantum operations in the operation subgroups being within the qubit sets corresponding to the operation subgroups; and

combine quantum operations in a target operation subgroup and filling operations into the target operation group; the target operation subgroup being an operation subgroup that includes a maximum quantity of quantum operations in the operation subgroups respectively corresponding to the two qubit sets; and the filling operation being an identity quantum operation corresponding to filling qubits, the filling qubits being qubits other than qubits corresponding to the target operation subgroup in a qubit set corresponding to the target operation subgroup.

In a possible implementation, the designated target is a single scalar target obtained based on the inter-area crosstalk and an average gate fidelity of quantum operations under an action of the control waveform.
In a possible implementation, a formula of the single scalar target is:

$$L = 1 - F\left(U(T), U_{Target}(T)\right) + \sum_{i=1}^{n} w_i \left\| U_{Xtalk}^i(T) - \mathbf{0} \right\|_F,$$

$L$ being the single scalar target, $U(T)$ representing a unitary transformation of a corresponding quantum operation under an action of the control waveform, $U_{Target}(T)$ representing a target unitary transformation of the corresponding quantum operation, $F\left(U(T), U_{Target}(T)\right)$ representing an average gate fidelity between $U(T)$ and $U_{Target}(T)$, and $U_{Xtalk}^i(T)$ representing evolution of a closed quantum system under the impact of the inter-area crosstalk.
In a possible implementation, the apparatus further includes:

an iterative update module, configured to perform R times of iterative update on a function parameter of a control waveform function of a target quantum operation based on the single scalar target, $R \geq 2$ and R being an integer; the target quantum operation being any one of schedulable quantum operations and identity quantum operations; and

a waveform generation module, configured to generate a control waveform of the target quantum operation based on a function parameter after the iterative update.

In a possible implementation, the iterative update module is configured to:

obtain first system evolution during an $r^{th}$ time of iteration, the first system evolution being evolution of a closed quantum system under impact of an $r^{th}$ control waveform; $2 \leq r \leq R$, and r being an integer; and the $r^{th}$ control waveform being a control waveform corresponding to the function parameter after a $(r-1)^{th}$ time of iterative update;

obtain second system evolution based on the first system evolution, the second system evolution being evolution of a closed quantum system under impact of the inter-area crosstalk during the $r^{th}$ time of iteration;

obtain the single scalar target during the $r^{th}$ time of iteration based on the second system evolution and an average gate fidelity of the target quantum operation under the action of the $r^{th}$ control waveform; and

update the function parameter after the $(r-1)^{th}$ time of iterative update based on the single scalar target during the $r^{th}$ time of iteration, to obtain the function parameter after the $r^{th}$ time of iterative update.

In a possible implementation, the inter-area crosstalk includes an inter-area ZZ crosstalk.

In summary, in the solution shown in this embodiment of this application, for a quantum operation corresponding to a quantum computing device, in a case that it is ensured that the quantum operation is undistorted, a control waveform for minimizing an inter-area crosstalk generated when the quantum operation is executed on the quantum computing device is obtained, and the quantum operation is executed on the quantum computing device based on the control waveform, thereby suppressing, in a manner of optimizing the control waveform of the quantum operation, the inter-area crosstalk caused by the quantum operation. Because a control waveform can be optimized for any type of quantum operation, this solution can implement crosstalk suppression on any type of quantum operation, and improve the applicability of the crosstalk suppression, thereby improving the effect of the crosstalk suppression.

FIG. 27 is a block diagram of an apparatus for generating a control waveform of a quantum operation according to an embodiment of this application. As shown in FIG. 27, the apparatus may include:

a quantum operation obtaining module 2701, configured to obtain a scheduled quantum operation;

a parameter obtaining module 2702, configured to obtain a function parameter of a control waveform function of the scheduled quantum operation based on the designated target; the designated target being configured to minimize an inter-area crosstalk in a case that the quantum operation is controlled to be undistorted, the inter-area crosstalk being a crosstalk between qubits falling within different connected areas, the connected areas being obtained through division on qubits in the quantum computing device according to whether a quantum operation being executed on the qubits; and

a waveform generation module 2703, configured to generate a control waveform of the scheduled quantum operation based on the function parameter.

For a process in which the apparatus for generating a control waveform of a quantum operation generates a control waveform of a scheduled quantum operation, reference may be made to the related description in the foregoing embodiment shown in FIG. 3, and details are not described herein again.

In summary, in the solution shown in this embodiment of this application, for a quantum operation corresponding to a quantum computing device, in a case that it is ensured that the quantum operation is undistorted, a control waveform for minimizing an inter-area crosstalk generated when the quantum operation is executed on the quantum computing device is obtained, thereby suppressing, in a manner of optimizing the control waveform of the quantum operation, the inter-area crosstalk caused by the quantum operation. Because a control waveform can be optimized for any type of quantum operation, this solution can implement crosstalk suppression on any type of quantum operation, and improve the applicability of the crosstalk suppression, thereby improving the effect of the crosstalk suppression.

When the apparatus provided in the foregoing embodiments implements functions of the apparatus, the division of the foregoing functional modules is merely an example for description. In actual application, the functions may be assigned to and completed by different functional modules according to requirements, that is, an internal structure of the device is divided into different functional modules, to complete all or some of the functions described above. In addition, the apparatus and method embodiments provided in the foregoing embodiments belong to the same conception. For the specific implementation process, reference may be made to the method embodiments, and details are not described herein again.

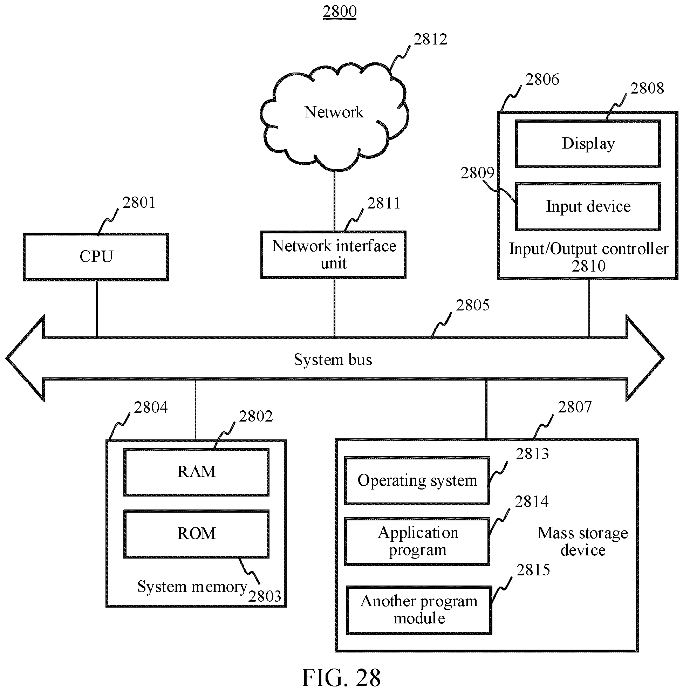

FIG. 28 is a structural block diagram of a computer device according to an embodiment of this application. The computer device may be configured to implement the method provided in the foregoing embodiments. For example, the computer device is a classical computer.

The computer device 2800 includes a processing unit (such as a central processing unit (CPU), a graphics processing unit (GPU), or a field programmable gate array (FPGA)) 2801, a system memory 2804 including a random access memory (RAM) 2802 and a read-only memory (ROM) 2803, and a system bus 2805 connecting the system memory 2804 and the CPU 2801. The computer device 2800 further includes a basic input/output system (I/O system) 2806 assisting in transmitting information between components in the server, and a mass storage device 2807 configured to store an operating system 2813, an application program 2814, and another program module 2815.

The basic I/O system 2806 includes a display 2808 configured to display information and an input device 2809 such as a mouse or a keyboard configured to input information by a user. The display 2808 and the input device 2809 are both connected to the CPU 2801 by using an input/output (I/O) controller 2810 connected to the system bus 2805. The basic I/O system 2806 may further include the I/O controller 2810 configured to receive and process inputs from a plurality of other devices such as a keyboard, a mouse, or an electronic stylus. Similarly, the I/O controller 2810 further provides an output to a display screen, a printer, or another type of output device.

The mass storage device 2807 is connected to the CPU 2801 by using a mass storage controller (not shown) connected to the system bus 2805. The mass storage device 2807 and an associated computer-readable medium thereof provide non-volatile storage for the computer device 2800. That is, the mass storage device 2807 may include a computer-readable medium (not shown) such as a hard disk or a compact disc read-only memory (CD-ROM) driver.

Without loss of generality, the computer-readable medium may include a computer storage medium and a communication medium. The computer storage medium includes volatile and non-volatile media, and removable and non-removable media implemented by using any method or technology and configured to store information such as computer-readable instructions, a data structure, a program module, or other data. The computer storage medium includes a RAM, a ROM, an erasable programmable ROM (EPROM), an electrically erasable programmable ROM (EEPROM), a flash memory or another solid-state memory technology, a CD-ROM, a digital versatile disc (DVD) or another optical memory, a tape cartridge, a magnetic cassette, a magnetic disk memory, or another magnetic storage device. Certainly, a person skilled in art can know that the computer storage medium is not limited to the foregoing several types. The system memory 2804 and the mass storage device 2807 may be collectively referred to as a memory.

According to the embodiments of this application, the computer device 2800 may be further connected, through a network such as the Internet, to a remote computer on the network and run. That is, the computer device 2800 may be connected to a network 2812 by using a network interface unit 2811 connected to the system bus 2805, or may be connected to another type of network or a remote computer system (not shown) by using a network interface unit 2811.

The memory further includes at least one instruction, at least one program, a code set, or an instruction set. The at least one instruction, the at least one program, the code set, or the instruction set is stored in the memory and is configured to be executed by one or more processors to implement the foregoing quantum operation execution method.

In an exemplary embodiment, a computer-readable storage medium is further provided, the storage medium storing at least one instruction, at least one program, a code set, or an instruction set, the at least one instruction, the at least one program, the code set, or the instruction set, when executed by a processor, implementing the foregoing quantum operation execution method.

Optionally, the computer-readable storage medium may include: a ROM, a RAM, a solid state drive (SSD), an optical disc, or the like. The RAM may include a resistance random access memory (ReRAM) and a dynamic random access memory (DRAM).

In an exemplary embodiment, a computer program product or a computer program is provided. The computer program product or the computer program includes computer instructions, and the computer instructions are stored in the computer-readable storage medium. A processor of the computer device reads the computer instructions from the computer-readable storage medium, and the processor executes the computer instructions, to cause the computer device to perform the method shown in the foregoing embodiments.

In an exemplary embodiment, a quantum operation chip is further provided, and the quantum operation chip is configured to implement the method shown in the foregoing embodiments.

"Plurality of" mentioned in the specification refers to two or more. "And/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, the step numbers described in this specification merely exemplarily show a possible execution sequence of the steps. In some other embodiments, the steps may not be performed according to the number sequence. For example, two steps with different numbers may be performed simultaneously, or two steps with different numbers may be performed according to a sequence contrary to the sequence shown in the figure. This is not limited in the embodiments of this application.

The foregoing descriptions are merely exemplary embodiments of this application, but are not intended to limit this application. Any modification, equivalent replacement, or improvement and the like made within the spirit and principle of this application fall within the protection scope of this application.

**Claims**

1. A quantum operation execution method, performed by a computer device, the method comprising:

obtaining n unscheduled quantum operations corresponding to a quantum circuit, n being greater than or equal to 1, and n being an integer;
performing an operation schedule based on a topological structure of a quantum computing device and the n unscheduled quantum operations, to obtain a target operation group, the target operation group comprising a plurality of scheduled quantum operations; and
executing in parallel the scheduled quantum operations comprised in the target operation group on the quantum computing device,
a control waveform of the scheduled quantum operation being generated based on a designated target, the designated target being configured to minimize an inter-area crosstalk in a case that the quantum operation is controlled to be undistorted, the inter-area crosstalk being a crosstalk between qubits falling within different connected areas, the connected areas being obtained through division on qubits in the quantum computing device according to whether a quantum operation being executed on the qubits.

2. The method according to claim 1, wherein the performing an operation schedule based on a topological structure of a quantum computing device and the n unscheduled quantum operations, to obtain a target operation group comprises:

obtaining a schedulable set based on the n unscheduled quantum operations, the schedulable set comprising schedulable quantum operations in the n unscheduled quantum operations;
extracting a candidate operation group from the schedulable set;
obtaining a qubit division solution, the qubit division solution being obtained based on the topological structure according to a designated division manner; and the qubit division solution indicating that the qubits in the quantum computing device are divided into two qubit sets, to form at least two connected areas on the quantum computing device; and
obtaining the target operation group based on the candidate operation group and the qubit division solution.

3. The method according to claim 2, wherein the extracting a candidate operation group from the schedulable set comprises:

obtaining, in a case that the schedulable set comprises two-bit quantum operations, the two-bit quantum operations in the schedulable set, to obtain a two-bit operation set;
constructing two operation groups based on two quantum operations that have a shortest distance in the two-bit operation set, in a case that the two-bit operation set comprises three or more operations;
performing i times of operation addition based on distances between the two operation groups and other quantum operations in the two-bit operation set, i being greater than or equal to 1, and i being an integer; and the other quantum operations being quantum operations other than the two quantum operations in the two-bit operation set; and
obtaining the candidate operation group based on a result of the i times of operation addition.

4. The method according to claim 3, wherein the performing i times of operation addition based on distances between the two operation groups and other quantum operations in the two-bit operation set comprises:

obtaining distances between the two operation groups and the other quantum operations in the two-bit operation set during a $j^{th}$ time of operation addition, $1 \leq j \leq i$, and j being an integer;
adding a designated quantum operation corresponding to a maximum distance into a designated operation group corresponding to the maximum distance, the maximum distance being a maximum value among the distances between the two operation groups and the other quantum operations;

obtaining a target odd-vertex pairing solution according to a first designated division manner based on the topological structure and the designated operation group, the target odd-vertex pairing solution comprising paths between odd-vertex pairs in a target dual graph, and the target odd-vertex pairing solution being configured to indicate the qubit division solution of the designated operation group; and the target dual graph being a dual graph of a topological graph, the topological graph being a planar graph of the topological structure;

deleting the designated quantum operation from the two-bit operation set in a case that the target odd-vertex pairing solution meets a crosstalk suppression requirement; and

executing a next operation addition process, in a case that a quantity of the other quantum operations after the designated quantum operation is deleted is not 0.

5. The method according to claim 4, wherein the obtaining a target odd-vertex pairing solution according to a first designated division manner based on the topological structure and the designated operation group comprises:

deleting edges corresponding to quantum operations in the designated operation group from the target dual graph;

obtaining a complete graph with odd-vertices in the target dual graph as vertices;

determining odd-vertex pairs in the complete graph;

obtaining at least one odd-vertex pairing solution for the odd-vertex pairs, the odd-vertex pairing solution comprising a path of each of the odd-vertex pairs in the target dual graph;

adding the edges corresponding to the quantum operations in the designated operation group in the target dual graph into the at least one odd-vertex pairing solution;

screening out odd-vertex pairing solutions in which qubits corresponding to the two-bit operations do not fall within a same connected area from the at least one odd-vertex pairing solution, to obtain odd-vertex pairing solutions after the screening out;

obtaining a quantity of qubits in a largest area in each of the odd-vertex pairing solutions after the screening out and a total quantity of insuppressible crosstalks in each of the odd-vertex pairing solutions after the screening out, the total quantity of insuppressible crosstalks being represented by a quantity of edges corresponding to paths in the odd-vertex pairing solution in the topological graph; the quantity of qubits in the largest area being represented by a quantity of vertices in a largest connected area in the topological graph after a cut set is removed, the cut set being a set of edges remained in the topological graph after the edges corresponding to the paths in the odd-vertex pairing solution in the topological graph are removed;

obtaining a crosstalk suppression index of each of the odd-vertex pairing solutions after the screening out based on the quantity of qubits in the largest area in each of the odd-vertex pairing solutions after the screening out and the total quantity of insuppressible crosstalks in each of the odd-vertex pairing solutions after the screening out; and

obtaining an odd-vertex pairing solution corresponding to a minimal crosstalk suppression index, as the target odd-vertex pairing solution.

6. The method according to claim 2, wherein the extracting a candidate operation group from the schedulable set comprises:

obtaining the schedulable set, as the candidate operation group, in a case that quantum operations in the schedulable set are single-bit quantum operations; and

the obtaining a qubit division solution comprises:

obtaining a target odd-vertex pairing solution according to a second designated division manner based on the topological structure;

removing edges corresponding to the target odd-vertex pairing solution from the topological graph, to obtain a topological graph after edge removal; and

performing vertex 2-coloring on the topological graph after edge removal, to obtain the qubit division solution.

7. The method according to claim 6, wherein the obtaining a target odd-vertex pairing solution according to a second designated division manner based on the topological structure comprises:

obtaining a complete graph, vertices in the complete graph being odd-vertices in a target dual graph, the target dual graph being a dual graph of a topological graph, the topological graph being a planar graph of the topological structure of the quantum computing device;

determining paired odd-vertex pairs in the complete graph;

obtaining at least one odd-vertex pairing solution for the odd-vertex pairs, the odd-vertex pairing solution comprising a path of each of the odd-vertex pairs in the target dual graph;

obtaining a quantity of qubits in a largest area in each of the at least one odd-vertex pairing solution and a total quantity of insuppressible crosstalks in each of the at least one odd-vertex pairing solution, the total quantity of insuppressible crosstalks being represented by a quantity of edges corresponding to paths in the odd-vertex pairing solution in the topological graph; the quantity of qubits in the largest area being represented by a quantity of vertices in a largest connected area in the topological graph after a cut set is removed, the cut set being a set of edges remained in the topological graph after the edges corresponding to the paths in the odd-vertex pairing solution in the topological graph are removed;

obtaining a crosstalk suppression index of each of the at least one odd-vertex pairing solution based on the quantity of qubits in the largest area in each of the at least one odd-vertex pairing solution and the total quantity of insuppressible crosstalks in each of the at least one odd-vertex pairing solution; and

obtaining an odd-vertex pairing solution corresponding to a minimal crosstalk suppression index, as the target odd-vertex pairing solution.

8. The method according to claim 5 or 7, wherein the crosstalk suppression index is: $\alpha N_Q + N_C$, $N_Q$ representing the quantity of qubits in the largest area, $N_C$ representing the total quantity of insuppressible crosstalks, and $\alpha$ representing importance of $N_Q$ and $N_C$.

9. The method according to claim 2, wherein the obtaining the target operation group based on the candidate operation group and the qubit division solution comprises:

dividing the qubits in the quantum computing device into two qubit sets based on the qubit division solution;

dividing the candidate operation group into operation subgroups respectively corresponding to the two qubit sets, qubits corresponding to quantum operations in the operation subgroups being within the qubit sets corresponding to the operation subgroups; and

combining quantum operations in a target operation subgroup and filling operations into the target operation group; the target operation subgroup being an operation subgroup that comprises a maximum quantity of quantum operations in the operation subgroups respectively corresponding to the two qubit sets; and the filling operation being an identity quantum operation corresponding to filling qubits, the filling qubits being qubits other than qubits corresponding to the target operation subgroup in a qubit set corresponding to the target operation subgroup.

10. The method according to claim 1, wherein the designated target is a single scalar target obtained based on the inter-area crosstalk and an average gate fidelity of quantum operations under an action of the control waveform.

11. The method according to claim 10, further comprising:

performing R times of iterative update on a function parameter of a control waveform function of a target quantum operation based on the single scalar target, R≥2 and R being an integer; the target quantum operation being any one of the schedulable quantum operations and the identity quantum operations; and

generating a control waveform of the target quantum operation based on the function parameter after the iterative update.

12. The method according to claim 11, wherein the performing R times of iterative update on a function parameter of a control waveform function of a target quantum operation based on the single scalar target comprises:

obtaining first system evolution during an $r^{th}$ time of iteration, the first system evolution being evolution of a closed quantum system under impact of an $r^{th}$ control waveform; $2 \leq r \leq R$, and r being an integer; and the $r^{th}$ control waveform being a control waveform corresponding to the function parameter after a $(r-1)^{th}$ time of iterative update;

obtaining second system evolution based on the first system evolution, the second system evolution being evolution of a closed quantum system under impact of the inter-area crosstalk during the $r^{th}$ time of iteration;

obtaining the single scalar target during the $r^{th}$ time of iteration based on the second system evolution and an average gate fidelity of the target quantum operation under the action of the $r^{th}$ control waveform; and

updating the function parameter after the $(r-1)^{th}$ time of iterative update based on the single scalar target during the $r^{th}$ time of iteration, to obtain the function parameter after the $r^{th}$ time of iterative update.

13. A method for generating a control waveform of a quantum operation, performed by a computer device, the method comprising:

obtaining a scheduled quantum operation;
obtaining a function parameter of a control waveform function of the scheduled quantum operation based on a designated target; the designated target being configured to minimize an inter-area crosstalk in a case that the quantum operation is controlled to be undistorted, the inter-area crosstalk being a crosstalk between qubits falling within different connected areas, the connected area being obtained through division according to whether a quantum operation being executed on qubits comprised in a quantum computing device; and
generating a control waveform of the scheduled quantum operation based on the function parameter.

14. A quantum operation execution apparatus, the apparatus comprising:

a quantum operation obtaining module, configured to obtain n unscheduled quantum operations corresponding to a quantum circuit, n being greater than or equal to 1, and n being an integer;
a quantum operation schedule module, configured to perform an operation schedule based on a topological structure of a quantum computing device and the n unscheduled quantum operations, to obtain a target operation group, the target operation group comprising a plurality of scheduled quantum operations; and
a quantum operation execution module, configured to execute in parallel the scheduled quantum operations comprised in the target operation group on the quantum computing device,
a control waveform of the scheduled quantum operation being generated based on a designated target, the designated target being configured to minimize an inter-area crosstalk in a case that the quantum operation is controlled to be undistorted, the inter-area crosstalk being a crosstalk between qubits falling within different connected areas, the connected areas being obtained through division according to whether a quantum operation being executed on qubits in the quantum computing device.

15. The apparatus according to claim 14, wherein the quantum operation schedule module comprises:

a schedulable set obtaining submodule, configured to obtain a schedulable set based on the n unscheduled quantum operations, the schedulable set comprising schedulable quantum operations in the n unscheduled quantum operations;
a candidate operation group extraction submodule, configured to extract a candidate operation group from the schedulable set;
a division solution obtaining submodule, configured to obtain a qubit division solution, the qubit division solution being obtained based on the topological structure according to a designated division manner; and the qubit division solution indicating that the qubits in the quantum computing device are divided into two qubit sets, to form at least two connected areas on the quantum computing device; and
a target operation group obtaining submodule, configured to obtain the target operation group based on the candidate operation group and the qubit division solution.

16. The apparatus according to claim 15, wherein the candidate operation group extraction submodule comprising:

a two-bit operation set obtaining unit, configured to obtain, in a case that the schedulable set comprises two-bit quantum operations, the two-bit quantum operations in the schedulable set, to obtain a two-bit operation set;
an operation group construction unit, configured to construct two operation groups based on two quantum operations that have a shortest distance in the two-bit operation set in a case that the two-bit operation set comprises three or more operations;
an operation addition unit, configured to perform i times of operation addition based on distances between the two operation groups and other quantum operations in the two-bit operation set, i being greater than or equal to 1, and i being an integer; the other quantum operations being quantum operations other than the two quantum operations in the two-bit operation set; and
a candidate operation group obtaining unit, configured to obtain the candidate operation group based on a result of the i times of operation addition.

17. The apparatus according to claim 16, wherein the operation addition unit is configured to:

obtain distances between the two operation groups and the other quantum operations in the two-bit operation set during a $j^{th}$ time of operation addition, $1 \leq j \leq i$, and j being an integer;

add a designated quantum operation corresponding to a maximum distance into a designated operation group corresponding to the maximum distance, the maximum distance being a maximum value among the distances between the two operation groups and the other quantum operations;

obtain a target odd-vertex pairing solution according to a first designated division manner based on the topological structure and the designated operation group, the target odd-vertex pairing solution comprising paths between odd-vertex pairs in a target dual graph, and the target odd-vertex pairing solution being configured to indicate the qubit division solution of the designated operation group; and the target dual graph being a dual graph of a topological graph, the topological graph being a planar graph of the topological structure;

delete the designated quantum operation from the two-bit operation set in a case that the target odd-vertex pairing solution meets a crosstalk suppression requirement; and

execute a next operation addition process, in a case that a quantity of the other quantum operations after the designated quantum operation is deleted is not 0.

18. The apparatus according to claim 17, wherein in obtaining a target odd-vertex pairing solution according to a first designated division manner based on the topological structure and the designated operation group, the operation addition unit is configured to:

delete edges corresponding to quantum operations in the designated operation group from the target dual graph;

obtain a complete graph with odd-vertices in the target dual graph as vertices;

determine odd-vertex pairs in the complete graph;

obtain at least one odd-vertex pairing solution for the odd-vertex pairs, the odd-vertex pairing solution comprising a path of each of the odd-vertex pairs in the target dual graph;

add the edges corresponding to the quantum operations in the designated operation group in the target dual graph into the at least one odd-vertex pairing solution;

screen out odd-vertex pairing solutions in which qubits corresponding to the two-bit operations do not fall within a same connected area from the at least one odd-vertex pairing solution, to obtain odd-vertex pairing solutions after the screening out;

obtain a quantity of qubits in a largest area in each of the odd-vertex pairing solutions after the screening out and a total quantity of insuppressible crosstalks in each of the odd-vertex pairing solutions after the screening out, the total quantity of insuppressible crosstalks being represented by a quantity of edges corresponding to paths in the odd-vertex pairing solution in the topological graph; the quantity of qubits in the largest area being represented by a quantity of vertices in a largest connected area in the topological graph after a cut set is removed, the cut set being a set of edges remained in the topological graph after the edges corresponding to the paths in the odd-vertex pairing solution in the topological graph are removed;

obtain a crosstalk suppression index of each of the odd-vertex pairing solutions after the screening out based on the quantity of qubits in the largest area in each of the odd-vertex pairing solutions after the screening out and the total quantity of insuppressible crosstalks in each of the odd-vertex pairing solutions after the screening out; and

obtain an odd-vertex pairing solution corresponding to a minimal crosstalk suppression index, as the target odd-vertex pairing solution.

19. The apparatus according to claim 15, wherein

the candidate operation group extraction submodule is configured to obtain the schedulable set, as the candidate operation group, in a case that quantum operations in the schedulable set are single-bit quantum operations; and

the division solution obtaining submodule comprises:

a pairing solution obtaining unit, configured to obtain a target odd-vertex pairing solution according to a second designated division manner based on the topological structure;

an edge removal unit, configured to remove edges corresponding to the target odd-vertex pairing solution from the topological graph, to obtain a topological graph after edge removal; and

a coloring unit, configured to perform vertex 2-coloring on the topological graph after the edge removal, to obtain the qubit division solution.

20. The apparatus according to claim 19, wherein the pairing solution obtaining unit is configured to:

obtain a complete graph, vertices in the complete graph being odd-vertices in a target dual graph, the target dual graph being a dual graph of a topological graph, the topological graph being a planar graph of the topological structure of the quantum computing device;

determine paired odd-vertex pairs in the complete graph;

obtain at least one odd-vertex pairing solution for the odd-vertex pairs, the odd-vertex pairing solution comprising a path of each of the odd-vertex pairs in the target dual graph;

obtain a quantity of qubits in a largest area in each of the at least one odd-vertex pairing solution and a total quantity of insuppressible crosstalks in each of the at least one odd-vertex pairing solution, the total quantity of insuppressible crosstalks being represented by a quantity of edges corresponding to paths in the odd-vertex pairing solution in the topological graph; the quantity of qubits in the largest area being represented by a quantity of vertices in a largest connected area in the topological graph after a cut set is removed, the cut set being a set of edges remained in the topological graph after the edges corresponding to the paths in the odd-vertex pairing solution in the topological graph are removed;

obtain a crosstalk suppression index of each of the at least one odd-vertex pairing solution based on the quantity of qubits in the largest area in each of the at least one odd-vertex pairing solution and the total quantity of insuppressible crosstalks in each of the at least one odd-vertex pairing solution; and

obtain an odd-vertex pairing solution corresponding to a minimal crosstalk suppression index, as the target odd-vertex pairing solution.

21. The apparatus according to claim 18 or 20, wherein the crosstalk suppression index is: $\alpha N_Q + N_C$, $N_Q$ representing the quantity of qubits in the largest area, $N_C$ representing the total quantity of insuppressible crosstalks, and $\alpha$ representing importance of $N_Q$ and $N_C$.

22. The apparatus according to claim 15, wherein the target operation group obtaining submodule is configured to:

divide the qubits in the quantum computing device into two qubit sets based on the qubit division solution;

divide the candidate operation group into operation subgroups respectively corresponding to the two qubit sets, qubits corresponding to quantum operations in the operation subgroups being within the qubit sets corresponding to the operation subgroups; and

combine quantum operations in a target operation subgroup and filling operations into the target operation group; the target operation subgroup being an operation subgroup that comprises a maximum quantity of quantum operations in the operation subgroups respectively corresponding to the two qubit sets; and the filling operation being an identity quantum operation corresponding to filling qubits, the filling qubits being qubits other than qubits corresponding to the target operation subgroup in a qubit set corresponding to the target operation subgroup.

23. The apparatus according to claim 14, wherein the designated target is a single scalar target obtained based on the inter-area crosstalk and an average gate fidelity of quantum operations under an action of the control waveform.

24. The apparatus according to claim 23, wherein the apparatus further comprises:

an iterative update module, configured to perform R times of iterative update on a function parameter of a control waveform function of a target quantum operation based on the single scalar target, $R \geq 2$ and R being an integer; the target quantum operation being any one of the schedulable quantum operations and the identity quantum operations; and

a waveform generation module, configured to generate a control waveform of the target quantum operation based on the function parameter after the iterative update.

25. The apparatus according to claim 24, wherein the iterative update module is configured to:

obtain first system evolution during an $r^{th}$ time of iteration, the first system evolution being evolution of a closed quantum system under impact of an $r^{th}$ control waveform; $2 \leq r \leq R$, and r being an integer; and the $r^{th}$ control waveform being a control waveform corresponding to the function parameter after a $(r-1)^{th}$ time of iterative update;

obtain second system evolution based on the first system evolution, the second system evolution being evolution of a closed quantum system under impact of the inter-area crosstalk during the $r^{th}$ time of iteration;

obtain the single scalar target during the $r^{th}$ time of iteration based on the second system evolution and an average gate fidelity of the target quantum operation under the action of the $r^{th}$ control waveform; and

update the function parameter after the $(r-1)^{th}$ time of iterative update based on the single scalar target during

the r<sup>th</sup> time of iteration, to obtain the function parameter after the r<sup>th</sup> time of iterative update.

26. An apparatus for generating a control waveform of a quantum operation, the apparatus comprising:

a quantum operation obtaining module, configured to obtain a scheduled quantum operation;
a parameter obtaining module, configured to obtain a function parameter of a control waveform function of the scheduled quantum operation based on the designated target; the designated target being configured to minimize an inter-area crosstalk in a case that the quantum operation is controlled to be undistorted, the inter-area crosstalk being a crosstalk between qubits falling within different connected areas, the connected areas being obtained through division on qubits in the quantum computing device according to whether a quantum operation being executed on the qubits; and
a waveform generation module, configured to generate a control waveform of the scheduled quantum operation based on the function parameter.

27. A quantum operation chip, configured to implement the quantum operation execution method according to any one of claims 1 to 12, or configured to implement the method for generating a control waveform of a quantum operation according to claim 13.

28. A computer device, comprising at least one quantum operation chip according to claim 27.

29. A computer-readable storage medium, storing at least one computer instruction, the at least one computer instruction, when executed by a processor in a computer device, causing the computer device to implement the quantum operation execution method according to any one of claims 1 to 12, or the method for generating a control waveform of a quantum operation according to claim 13.

30. A computer program product, comprising computer instructions, the computer instructions, when executed by a processor in a computer device, causing the computer device to implement the quantum operation execution method according to any one of claims 1 to 12, or the method for generating a control waveform of a quantum operation according to claim 13.

12

Dilution
refrigerator

14           13          11

Computer     Control device     Quantum
computing device

FIG. 1

21

Obtain n unscheduled quantum operations corresponding to a quantum circuit, n being greater than or equal to 1, and n being an integer

22

Perform operation schedule based on a topological structure of a quantum computing device and the n unscheduled quantum operations, to obtain a target operation group, the target operation group including scheduled quantum operations

23

Execute in parallel the scheduled quantum operations included in the target operation group on the quantum computing device, a control waveform of the scheduled quantum operation being generated based on a designated target, the designated target being used for minimizing an inter-area crosstalk in a case that the quantum operation is controlled to be undistorted, the inter-area crosstalk being a crosstalk between qubits falling within different connected areas, the connected areas being obtained through division according to whether a quantum operation is executed on qubits in the quantum computing device

FIG. 2

Obtain n unscheduled quantum operations corresponding to a quantum circuit, n being greater than or equal to 1, and n being an integer

301

Obtain a schedulable set based on the n unscheduled quantum operations, the schedulable set including schedulable quantum operations in the n unscheduled quantum operations

302

Extract a candidate operation group from the schedulable set, and obtain a qubit division solution

303

Obtain the target operation group based on the candidate operation group and the qubit division solution

304

Execute in parallel the scheduled quantum operations included in the target operation group on the quantum computing device

305

FIG. 3

FIG. 4

Quantity of bits in a largest
area = 4
Total quantity of
unsuppressable ZZ
crosstalks = 3
(a)

Quantity of bits in a largest
area = 3
Total quantity of
unsuppressable ZZ
crosstalks = 4
(b)

Quantity of bits in a largest
area = 2
Total quantity of
unsuppressable ZZ
crosstalks = 5
(c)

FIG. 5

FIG. 6

$$(1+3)-3=1$$

| Solution | | | | $N_Q$ | $N_C$ |
|---|---|---|---|---|---|
| (1) | i → c → d → j | | | 4 | 3 |
| (2) | i → c → r → d → j | | | 3 | 4 |
| (3) | i → c → r → l → k → j | | | 2 | 5 |

FIG. 7

FIG. 8

(a)        (b)

FIG. 9

FIG. 10

D=6, $N_Q$=4, $N_C$=6

(a)

D=10, $N_Q$=2, $N_C$=3

(b)

FIG. 11

FIG. 12

FIG. 13

FIG. 14

FIG. 15

FIG. 16

$R_x(\pi/2)$

Waveform in
this application

Gaussian
waveform

FIG. 17

$I$

Waveform in
this application

Gaussian
waveform

FIG. 18

FIG. 19

$R_{xx}(\pi/2)$

Waveform in this application
Flat-topped Gaussian waveform

FIG. 20

4 bits    6 bits    9 bits    12 bits

FIG. 21

45

▨ Maximum parallel schedule

☐ Schedule manner in this application

▼ Increase rate

FIG. 22

Quantum circuit

Waveform optimization solution involved in this application

Operation schedule solution involved in this application

Control waveform for suppressing a ZZ crosstalk

Quantum circuit execution solution

Execution on a quantum computing device

FIG. 23

```
┌─────────────────────────┐
│ Identity quantum operation │
│         circuit         │
└─────────────────────────┘
              │
              ▼
┌──────────────────────┐        ┌─────────────────────────┐
│ Waveform optimization │        │ Operation schedule solution │
│ solution involved in this │    │ involved in this application │
│     application      │        └─────────────────────────┘
└──────────────────────┘                    │
           │                                ▼
           ▼                   ┌─────────────────────────┐
┌──────────────────────┐       │ Circuit execution solution for │
│  Control waveform of an │     │ an identity quantum operation │
│ identity quantum operation for │ └─────────────────────────┘
│ suppressing a ZZ crosstalk │              │
└──────────────────────┘                    │
           │                                │
           ▼                                ▼
┌──────────────────────────────────────────────────────┐
│            Execution on a quantum memory              │
└──────────────────────────────────────────────────────┘
```

FIG. 24

$q_1$ ─[ $I$ ]─[ $I$ ]─ · · · ─[ $I$ ]─

$q_2$ ─[ $I$ ]─[ $I$ ]─ · · · ─[ $I$ ]─

⋮               ⋮

$q_n$ ─[ $I$ ]─[ $I$ ]─ · · · ─[ $I$ ]─

FIG. 25

2601

Quantum operation
obtaining module

2602

Quantum operation
schedule module

2603

Quantum operation
execution module

FIG. 26

2701

Quantum operation
obtaining module

2702

Parameter obtaining
module

2703

Waveform generation
module

FIG. 27

2800

2812

Network

2806

2808

Display

2809

Input device

Input/Output controller
2810

2801

CPU

2811

Network interface
unit

2805

System bus

2804

2802

RAM

ROM

System memory 2803

2807

2813

Operating system

2814

Application
program

Mass storage
device

2815

Another program
module

FIG. 28

## INTERNATIONAL SEARCH REPORT

| | |
|---|---|
| International application No. | |
| | **PCT/CN2021/117519** |

**A. CLASSIFICATION OF SUBJECT MATTER**

G06N 10/00(2019.01)i

According to International Patent Classification (IPC) or to both national classification and IPC

**B. FIELDS SEARCHED**

Minimum documentation searched (classification system followed by classification symbols)

G06N G06F G09B

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 量子, 波形, 操作, 串扰, 连通, 调度, 拓扑, 目标, 计算, 比特, quantum, wave, operate, crosstalk, connect, topolopy, target, object, compute, bit

**C. DOCUMENTS CONSIDERED TO BE RELEVANT**

| Category* | Citation of document, with indication, where appropriate, of the relevant passages | Relevant to claim No. |
|---|---|---|
| PX | CN 113033812 A (TENCENT TECHNOLOGY SHENZHEN CO., LTD.) 25 June 2021 (2021-06-25)<br>    description paragraphs 0091-0092, 0319-0143 and claims 1-15 | 1-30 |
| A | CN 110942152 A (HEFEI ORIGIN QUANTUM COMPUTING TECHNOLOGY CO., LTD.) 31 March 2020 (2020-03-31)<br>    description paragraphs 0021-0086 | 1-30 |
| A | CN 109685216 A (TSINGHUA UNIVERSITY) 26 April 2019 (2019-04-26)<br>    entire document | 1-30 |
| A | CN 110085094 A (CIQTEK (HEFEI) TECHNOLOGY CO., LTD.) 02 August 2019 (2019-08-02)<br>    entire document | 1-30 |
| A | WO 2020141079 A1 (INTERNATIONAL BUSINESS MACHINES CORPORATION et al.) 09 July 2020 (2020-07-09)<br>    entire document | 1-30 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 December 2021** | **06 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/117519**

| Patent document cited in search report | | | Publication date (day/month/year) | Patent family member(s) | | | Publication date (day/month/year) |
|---|---|---|---|---|---|---|---|
| CN | 113033812 | A | 25 June 2021 | None | | | |
| CN | 110942152 | A | 31 March 2020 | WO | 2021082533 | A1 | 06 May 2021 |
| CN | 109685216 | A | 26 April 2019 | None | | | |
| CN | 110085094 | A | 02 August 2019 | None | | | |
| WO | 2020141079 | A1 | 09 July 2020 | US | 10657304 | B1 | 19 May 2020 |
| | | | | US | 2020218842 | A1 | 09 July 2020 |
| | | | | CN | 113261017 | A | 13 August 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110357168